(19) Europäisches Patentamt
European Patent Office
Office européen des brevets

(11) **EP 4 703 273 A1**

(12) # EUROPEAN PATENT APPLICATION

(43) Date of publication:
**04.03.2026   Bulletin 2026/10**

(21) Application number: **25198566.9**

(22) Date of filing: **28.08.2025**

(51) International Patent Classification (IPC):
**B64U 50/38** (2023.01)     **B64U 10/14** (2023.01)
**B64U 20/75** (2023.01)     **B64U 20/87** (2023.01)
**B64U 50/19** (2023.01)     **B64U 60/50** (2023.01)
**B64U 101/26** (2023.01)     **B64U 101/30** (2023.01)

(52) Cooperative Patent Classification (CPC):
**B64U 50/38; B64U 10/14; B64U 20/75;**
**B64U 20/87; B64U 50/19; B64U 60/50;**
B64U 2101/26; B64U 2101/30; B64U 2201/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority:  30.08.2024   US 202463688915 P
27.05.2025   US 202563812446 P

(71) Applicant: **Nomadic Drones Inc.**
**Laguna Beach CA 92651 (US)**

(72) Inventors:
• **WEIL, Lauritz**
**55126 Mainz (DE)**
• **BRUHEIM MOLDSKRED, Andreas**
**80636 Munich (NO)**

(74) Representative: **Stellbrink & Partner**
**Patentanwälte mbB**
**Widenmayerstrasse 10**
**80538 München (DE)**

(54) **IMPROVED DRONE WITH INTEGRATED CHARGING MECHANISM**

(57)     Disclosed is an unmanned aerial vehicle (UAV) configured for autonomous operation. The UAV comprises an electric propulsion system comprising a plurality of motors and a plurality of rotors and a sensor system. The UAV further comprises a control system configured for receiving data from the sensor system and for controlling the electric propulsion system. Thus UAV also comprises a battery system comprising a plurality of battery cells and a charging system configured for receiving power a by electro-magnetic induction from a power line cable. The UAV is a UAV for inspection of AC-overhead power lines. Further, a method comprising operating the UAV is disclosed. The method comprises generating image data relating to an overhead power line by the sensor system, approaching a power line cable by the unmanned aerial vehicle, receiving power from the power line cable by means of the charging system and charging the battery with the power received from the power line cable, and the unmanned aerial vehicle taking off from the power line cable.

Fig. 2

EP 4 703 273 A1

## Description

Technical Field

The invention relates to the field of unmanned aerial vehicles, particularly unmanned aerial vehicles for power line inspection, and charging mechanisms for unmanned aerial vehicles.

Technological Background

Power lines require regular inspections to ensure safe and reliable operation and to detect wear and/or signs of failure. Nowadays, such inspections are performed by ground patrols or manned helicopters. However, both options come with significant safety risks.

Also, disadvantageously, power lines extend over great distances and may be located in remote areas or areas hard to reach. Thus, the inspection process is labor-intensive, time-consuming and requires significant technical and financial efforts.

Thus, it has been suggested in the prior art to use unmanned aerial vehicles (UAVs), also referred to as drones, for inspecting power lines. In civil contexts and particularly when it comes to autonomous operation, these are usually propelled by electric motors. However, due to the limited battery capacity, the operating range of such unmanned aerial vehicles (UAVs) is limited, requiring regular recharging and reducing operational efficiency.

Generally, it has been suggested in the prior art to use power transmitted by the power line to recharge the battery of UAVs for different purposes. For alternating current (AC) power lines, it has been suggested to inductively couple a receiver element of the UAV to the power line. However, in view of the relatively low frequency of power lines (typically 50 Hz or 60 Hz), this approach is significantly more challenging for high charging powers than power transmission at higher frequencies.

US 7398946 B1 discloses a rechargeable battery energized unmanned aerial vehicle having surveillance capability and an ability to clandestinely collect propulsion and other energy needs from a conveniently located and possibly enemy owned energy transmission line. Energy collection is by way of a parked vehicle engagement with the transmission line in a current flow dependent, magnetic field determined, rather than shunt, voltage dependent, conductor coupling. Surveillance during both a parked or docked condition and during aerial vehicle movement is also discussed.

US 7543780 B1 discloses a small unmanned air vehicle system having autonomous electrical energy transmission line docking capability and especially usable in military or other surveillance situations. Transmission line field sensing by the small unmanned air vehicle is used as an addition to global position system and other navigation methods and is especially applied to vehicle docking maneuvers. A plurality of vehicle carried electromagnetic fields-responsive sensors provides transmission line based signals to the vehicle guidance system in both far field and near field environments. Surveillance sensors are included in the vehicle payload. Vehicle battery charging energy procurement from the transmission line docking is included.

US 9878787 B2 discloses a system and method for repowering an unmanned aircraft system. The system and method may comprise use of a utility transmission system configured to function as power system/source for UAV/aircraft and UAV/aircraft configured to interface with the power source/system. Systems and methods provide access and for administrating, managing, and monitoring access and interfacing by UAV/aircraft with the power system/source. UAV/aircraft system can be configured and operated/managed to interface with and use the power system/source (e.g. network of power lines from a utility transmission system) to enhance range and utility (e.g. for repowering and/or as a flyway or route). The system comprises an interface between the aircraft and the power source for power transfer; a monitoring system to monitor the aircraft; and an administrative/-management system to manage interaction/transaction with the aircraft. The power source for power transfer may be a power line; power transfer to the aircraft may be by wireless power transfer (capacitive or inductive or optical) of an aircraft while at or operating along the power line. The aircraft may comprise a connector configured to interface with the power source/line; the power line may be configured to interface with the connector/aircraft. Data communications between the aircraft and system may be facilitated for interaction/transaction.

US 10418853 B2 discloses methods, apparatus, systems and articles of manufacture to wirelessly power an unmanned aerial vehicle. An example unmanned aerial vehicle (UAV) includes a first electrode assembly to capacitively couple to a first power cable. The example UAV includes a second electrode assembly to capacitively couple to a second power cable. The first and second electrode assemblies, when capacitively coupled to the respective first and second power cables, are to receive power from at least one of the first and second power cables. The example UAV includes a power storage circuit to store the received power.

UAVs for power line inspection that are configured for magnetic harvesting power from the power line are, inter alia, disclosed by Ferrarispower Inc. online (e.g. under the link https://img1.wsimg.com/blobby/go/38456f11-ea38-4477-a8a9-90379d3d8dd6/Precision%20inspection%20drones.pdf retrieved on July 19, 2024).

Hoang, V. D., Nyboe, F. F., Malle, N. H., & Ebeid, E. (2024): "Autonomous Overhead Powerline Recharging for Uninterrupted Drone Operation", in "The 2024 IEEE International Conference on Robotics and Automation (ICRA2024) International Conference on Robotics and Automation (ICRA)." discloses a fully autonomous self-recharging drone system capable of long-duration sustained operations near powerlines. According to Hoang et al, the drone is equipped with a robust onboard perception and navigation system that enables it to locate powerlines and approach them for landing. A passively actuated gripping mechanism grasps the powerline cable during landing after which a control circuit regulates the magnetic field inside a split-core current transformer to provide sufficient holding force as well as battery recharging. The system is evaluated in an active outdoor three-phase powerline environment. The paper asserts to demonstrate multiple contiguous hours of fully autonomous uninterrupted drone operations composed of several cycles of flying, landing, recharging, and takeoff, validating the capability of extended, essentially unlimited, operational endurance.

While the above prior art generally discusses UAVs configured for being charged by the power line, efficiency of power reception and UAV operation can still be improved. Also, some of the UAV designs are not promising with respect to flight qualities.

Summary of the invention

It is thus an object to overcome or at least alleviate the shortcomings of the prior art. In particular, it is an object of the present invention to provide an improved unmanned aerial vehicle configured for being charged by AC-power lines, as well as a corresponding charging system and a method for operating said unmanned aerial vehicle.

It is another optional objective to provide a unmanned aerial vehicle with increased charging efficiency, a corresponding charging system and a method for operating said unmanned aerial vehicle.

It is still another optional objective to provide a unmanned aerial vehicle with improved operational characteristics, a charging system for use with said drone, and a method for operating said unmanned aerial vehicle.

In a first aspect, an unmanned aerial vehicle is disclosed. The unmanned aerial vehicle comprises an electric propulsion system comprising a plurality of motors and a plurality of rotors. For example, each motor may be configured for driving one of the rotors. The rotors may be configured for rotating about a vertical axis of the unmanned aerial vehicle.

The unmanned aerial vehicle may also be referred to as a drone, particularly as aerial drone.

The unmanned aerial vehicle further comprises a sensor system. The sensor system may particularly comprise a camera and/or a radar sensor. The sensor system may, for example, also comprise further sensors configured for sensing, e.g., flight parameters of the unmanned aerial vehicle.

The camera may be configured for sensing visible light, that is, electromagnetic radiation in a visible spectrum. The camera may for example be an RGB-camera. In particular, the camera may be configured for continuously sensing the visible light and generating image data based on the sensed visible light. The camera may be oriented in a downward direction of the unmanned aerial vehicle.

The unmanned aerial vehicle further comprises a control system configured for receiving data from the sensor system and for controlling the electric propulsion system. The control system may comprise a data processing system and a connection to an onboard bus system of the unmanned aerial vehicle.

The unmanned aerial vehicle further comprises a battery system comprising a plurality of battery cells. The battery cells may for example be lithium-ion cells, such as lithium-ion polymer cells. However, the battery cells may also comprise a different cell chemistry.

Further, the unmanned aerial vehicle further comprises a charging system configured for receiving power by electro-magnetic induction from a power line cable, particularly from an overhead power line cable.

The term "power line cable" is intended to refer to a power grid power line cable, particularly a high voltage power line cable configured for transmission of AC-power. In particular, the power line cable may be configured for transmission of AC power comprising a frequency of about 50 Hz or about 60Hz, which are typical transmission frequencies in public power grids.

The power line cable may be a cable of the overhead power line. The overhead power line may be configured for electric power transmission and/or distribution. The overhead power line usually comprises a plurality of power line cables.

The overhead power line may be configured for transmitting voltages of, e.g., 5 kV to several hundred kV. Such voltages make charging via contact between two cables of the overhead power line technically challenging, inter alia due to potential electric arcs and the necessity of parts of the unamend aerial vehicle being able to withstand high voltages.

The unmanned aerial vehicle may comprise a body. The unmanned aerial vehicle may comprise at least two legs at a lower side of the body.

The body may for example comprise the control system of the unmanned aerial vehicle. The body may be integrally formed. The body may also be integrally formed with other portions of the unmanned aerial vehicle, such as one or more portions of the legs.

The unmanned aerial vehicle may be configured for landing on the power line cable. The legs may be configured for supporting the unmanned aerial vehicle when it has landed on the power line cable. In particular, the unmanned aerial vehicle may be configured for landing on the power line cable in a configuration where the power line cable is located between the legs of the unmanned aerial vehicle.

The at least two legs may form an angle of 30° to 60°, preferably 35° to 55°, and still more preferably 40° to 50°.

Thus, optionally advantageously, landing on the power line cable may be facilitated, as the legs may guide the unmanned aerial vehicle while descending on the power line cable and may thus leave room for deviations of a position of the unmanned aerial vehicle with respect to the power line cable, e.g., due to wind, inaccuracy in navigation or flight control, and/or swinging or the power line cable.

The legs may comprise at least some of the battery cells. In particular, the legs may comprise all battery cells.

As a weight of the battery cells often corresponds to a significant share of a weight of the unmanned aerial vehicle, optionally advantageously, a center of gravity of the unmanned aerial vehicle may be lower due to the arrangement of the battery cells in the legs. A lower center of gravity may optionally advantageously yield a higher stability when the unmanned aerial vehicle has landed and/or is perching on the power line cable. Also, a lower center of gravity may optionally advantageously yield improved flight qualities.

The unmanned aerial vehicle may comprise a housing.

For example, the body may comprise the housing or at least a portion of the housing. The housing may comprise a portion of the legs. In particular, the housing may enclose one or more inner portions of the legs.

The housing may also enclose at least a portion of the charging system, particularly enclose the charging system. Thus, optionally advantageously, protection from environmental influences may be improved.

The housing may comprise one or more openings, e.g., for access to the battery cells.

The housing may be made in one piece. However, the housing may also comprise two parts that are joined. For example, the housing may be made from a polymer.

The unmanned aerial vehicle may comprise a plurality of arms. Each of the motors may be arranged at an arm. The arms may comprise a detachable connection to the body and/or to the housing.

Due to harsh operating conditions in proximity to power lines, mechanical damages to the arms may occur. The detachable connection to the body and/or the housing may optionally advantageously allow for simplified repair and/or maintenance of the unmanned aerial vehicle.

For example, the body and/or the housing may comprise interfaces for electrically and mechanically connecting the arms to the body. For example, each detachable connection of an arm and the body may comprise using a joint that enables quick replacement of the arm.

The body may comprise the charging system.

Thus, optionally advantageously, stability of the unmanned aerial vehicle may be improved compared to arrangements wherein the charging mechanism is connected to the body by means of an arm. This may particularly apply to stability when perching on the power line cable.

Also, the body comprising the charging system may optionally advantageously provide for a more integrated aerial vehicle, hence optionally advantageously providing for a lower weight of the unmanned aerial vehicle and/or improved flight qualities.

The at least one housing may be water-tight. That is, the housing may be configured for inhibiting ingress of water, particularly against ingress of precipitation, such as rain. The housing may, for example, comprise water-proof sealing of openings of the housing and/or the detachable connections to the arms.

The charging system may comprise at least one inductor and at least one magnetic core.

The magnetic core may be configured for at least partially enclosing a cable. The inductor may comprise a plurality of windings around at least a section of the core.

Thus, optionally advantageously, a magnetic coupling of the at least one inductor and the cable may be improved, providing for improved reception of power by electro-magnetic induction from the cable.

The at least one magnetic core may be one magnetic core.

For example, the magnetic core may be configured for at least partially enclosing, particularly substantially enclosing, the power line cable. For example, the magnetic core may comprise an annular shape. A cross-section of the core may, for example, comprise a circle, an elliptical shape or a rectangular shape. In some embodiments, the core may comprise a slot in at least one configuration.

The at least one magnetic core may comprise at least two parts. The charging system may be configured for assuming an open configuration and a closed configuration. Particularly, the at least one magnetic core may comprise two parts.

The at least two parts of the magnetic core, particularly the two parts of the magnetic core, may be parts comprising or being made from a core material. That is, the two parts may be made from a material of the magnetic core. The skilled person will easily understand that the core may still comprise further pieces, such as one or more holding members like clamps, one or more covers or other elements. However, these do not form part of magnetic core itself, as their interaction with a magnetic field caused by a cable at least partially enclosed by the magnetic core may be negligible with respect to the at least two parts of the magnetic core.

In the closed configuration, the at least two parts, particularly the two parts, of the magnetic core may form a substantially closed magnetic core.

In the open configuration, the at least two parts, particularly the two parts, of the magnetic core may be spaced from each other at least at one point of the magnetic core. In other words, in the open configuration, the magnetic core may, e.g., comprise at least one slot in a cross-section in a plane substantially orthogonal to a cable enclosed by the magnetic core in the closed configuration.

For example, the open configuration may be understood as being a configuration that is not the closed configuration.

For example, in the closed configuration of the charging system, the at least two parts of the magnetic core may be configured for substantially enclosing the cable, particularly the power line cable. In this example, in the open configuration of the charging system, the at least two parts of the magnetic core may be spaced from each other at least at one point, e.g., to allow a movement of the magnetic core with respect to the cable, such as to allow inserting the cable into the magnetic core and/or retrieving the cable from the magnetic core. A movement of the magnetic core with respect to the cable may, for example, be a movement of the unmanned aerial vehicle with respect to the power line cable, such as landing on the power line cable and/or taking off from the power line cable.

The at least one magnetic core may comprise the at least two parts configured to form the core, particularly the two parts configured to form the core.

For example, the parts may comprise a half-toroidal shape, providing a toroidal shape of the magnetic core in the closed configuration. However, the parts of the magnetic core may also be parts, particularly half-parts, of a cylindrical shell, i.e., a hollow cylinder, providing a hollow cylinder in the closed configuration.

In other words, in the closed configuration, the magnetic core may comprise a toroid-shape or a hollow cylinder-shape. Both may optionally advantageously provide for limited magnetic losses and improved electro-magnetic coupling of the cable and the at least one inductor.

In the closed configuration of the charging system, the at least one magnetic core may comprise a length of 30 mm to 50 mm, preferably 35 mm to 45 mm, such as about 40 mm.

In the closed configuration of the charging system, the at least one magnetic core may comprise an inner diameter of at least 20 mm and an outer diameter of at least 55 mm, preferably an inner diameter of at least 25 mm and an outer diameter of at least 52.5 mm, such as an inner diameter of about 30 mm and an outer diameter of about 50 mm.

According to simulations of the inventors which have been confirmed by experiments of the Inventors, these dimensions of the magnetic core have been found to optionally advantageously allow for a good trade-off of magnetic coupling, use of space around the cable in the charging system and weight of the charging system.

These dimensions have been found to be particularly advantageous for power line cables comprising a current rating of about 100 A and a diameter of, for example, up to 20 mm. However, for different cable dimensions and/or current ratings, different geometries of the magnetic core may be preferable.

In one exemplary embodiment, the at least one inductor may comprise at least 300 windings and at most 360 windings, preferably at least 315 windings and at most 345 windings, such as about 330 windings.

In case of a power line cable operated with about 100 A, this number of windings may optionally advantageously provide for a voltage of the received power sufficiently high for efficient operation of electronic components of the charging system and sufficiently low to not require extensive insulation onboard of the unmanned aerial vehicle.

The at least one magnetic core, particularly each of the two parts of the magnetic core, comprises at least one or a plurality of metal sheet(s).

In other words, each of the two parts of the magnetic core may comprise a plurality of metal sheets. The metal sheets may be substantially plane, however, the metal sheets may also be bent and/or curved.

For example, the metal sheets may be pieces of metal comprising length, a width and a height, wherein the height may be lower than the width and the height, e.g., at least by a factor of 10. The metal sheets may also be referred to as metal plates. The metal sheets may, e.g., be manufactured from a metal band or a metal sheet. In other words, the plurality of metal sheets may, e.g., be manufactured from a single metal sheet or metal band. However, the plurality of metal sheets may also be manufactured from a plurality of metal sheets.

The sheet(s) of each part of the core may be welded to adjacent sheet(s). In other words, each of the sheet(s) of a part of the magnetic core may comprise one or more welded connections to one or more adjacent sheet(s) of the part of the magnetic core.

Thus, optionally advantageously, a structural integrity of the core may be increased and, e.g., vibrations due to magnetic forces may be avoided.

The sheet(s) may comprise an insulating coating. The welded connections may provide conductive connection through the insulating coating. The welded connections may be spot-welded connections. However, different welding methods may also be used.

Thus, optionally advantageously, a resistance of the conductive connections through the insulating coating may maintain eddy losses in the magnetic core in an acceptable range.

The metal sheets of the at least one magnetic core, particularly the plurality of metal sheets of each of the parts of the at least one magnetic core, may comprise a magnetic saturation limit of at least 1.5 T, preferably at least 1.8 T, and still more preferably at least 2.1 T, such as a saturation limit of about 2.2 T.

The magnetic saturation limit may be a strength H of a magnetic field upon which a magnetic flux B in the metal sheet(s) increases at a significantly lower ratio than below said magnetic saturation limit. Due to the high currents and comparably low frequency of the currents in power lines of the power grid, a high magnetic field is generated and a high magnetic flux in the magnetic core is desired.

Thus, optionally advantageously, the above magnetic saturation limit provides for an efficient charging of the unmanned aerial vehicle by means of power received wirelessly from the power line cable. Hence, charging times and/or thermal losses resulting in undesired heat may be reduced.

The magnetic core may be made from an iron alloy, particularly from a high permeability iron alloy.

For example, the metal sheets may be made from the iron alloy, particularly from the high permeability iron alloy.

The iron alloy may, for example, comprise a relative permeability $\mu_r > 8000$ for a magnetic flux density in the range from 0.4 T and 1 T and a frequency of oscillation of the magnetic field of 60Hz. Additionally or alternatively, the high permeability iron may comprise a relative permeability $\mu_r > 4000$ for a magnetic flux density in the range from 0.4 T and 1.5 T and a frequency of oscillation of the magnetic field of 60Hz. The iron alloy may be selected from a Fe-Co-alloy, such as a cobalt-steel, a Fe-Si alloy, such as a silicon steel, and an amorphous iron alloy.

Optionally, these iron alloys may comprise a high magnetic permeability and high magnetic saturation limit, optionally advantageously providing for efficient charging.

In particular, the iron alloy may be an iron-silicon steel, particularly an iron-silicon comprising 1%-10 % silicon, particularly 5% to 8% silicon, such as about 6.5 % silicon.

Optionally advantageously, such silicon steels show particularly high magnetic saturation limits and thus provide for particularly efficient charging of the unmanned aerial vehicle.

The indications of silicon in % are intended to refer to mass-%.

The metal sheet(s) of at least one part of the core, particularly of each of the two parts of the core, may be arranged in a stack.

The metal sheet(s) in each stack may comprise substantially a same cross section in a plane perpendicular to a center axis of the magnetic core. In particular, the metal sheets in each stack may comprise substantially a same shape.

Thus, optionally advantageously, production of the single metal sheet(s) may simplified.

The metal sheet(s) of at least one part of the magnetic core, particularly of the at least two parts of the magnetic core, may be substantially flat.

The metal sheet(s) of at least one part of the core, particularly of each part of the core, may be bent. Particularly, at least two metal sheets of each part comprise a different bending radius.

In other words, the metal sheet(s) may comprise a shape comparable to pipe-sections, and the metal sheet(s) may be manufactured from substantially flat metal sheet(s).

The metal sheet(s) of at least one part of the magnetic core, particularly of each part of the magnetic core, may be arranged as a stack(s) of segments of circles comprising different diameters.

In other words, each of the two parts of the magnetic core may comprise a plurality of metal sheet(s) comprising a cross-section corresponding to a section of a plurality of concentric hollow cylinders.

The metal sheet(s) may be obtained by laser cutting. This may apply to embodiments with the flat metal sheet(s) and/or to embodiments with the bent metal sheet(s).

As discussed above, in each part of the magnetic core, the metal sheet(s) may be connected by welding, particularly by spot welding. Thus, as discussed above, optionally advantageously, a structural integrity of the core may be increased and, e.g., vibrations due to magnetic forces may be avoided while eddy losses in the magnetic core may be kept in an acceptable range

The at least one part, particularly the two parts of the magnetic core, may be obtained by a method comprising

- winding a metal band,

- joining, particularly welding, adjacent windings of the metal band, and

- cutting the wound and welded metal band into at least two parts, particularly in two parts.

In particular, the metal band may be welded during the winding, e.g. at pre-defined angular positions of the wound metal band or spaced apart by pre-defined angular or longitudinal distances.

The cutting may, e.g., be sawing, laser-cutting and/or plasma-cutting.

The metal band may also be a metal sheet.

The metal band may essentially consist of the iron alloy.

The metal band may comprise an insulating coating at least on one side of the metal band.

The method may comprise applying the insulating coating to the metal band, particularly before winding the metal band. However, the metal band may also comprise the coating at a beginning of the method.

Thus, optionally advantageously, a robust magnetic core, particularly robust parts of the magnetic core may be obtained. Also, optionally advantageously, the method is suitable for being carried out in an automated manner.

The charging system may comprise an engaging mechanism. The engaging mechanism may comprise two engaging sections. Each engaging section may be connected with a part of the magnetic core. Particularly, the engaging sections may be configured for at least partially enclosing the power line cable in the closed configuration of the charging system.

The engaging mechanism and the engaging section may also assume the open configuration of the charging system and the closed configuration of the charging system. The above discussion of the open configuration and the closed configuration may respectively apply.

The two engaging sections may be sections of one part. However, the two engaging sections may also be separate parts of be sections of separate parts.

Each engaging section may for example at least partially enclose a part of the magnetic core. However, each engaging section may, for example, also enclose an outer surface and/or a surface configured for facing the power line cable of the part of the magnetic to which the engaging section is connected.

In other words, in the closed configuration, the engaging sections may substantially enclose an inner surface of the magnetic core and/or an outer surface of the magnetic core. However, in the closed configuration, the at least two parts of the magnetic core may be in magnetic contact with each other.

The two engaging sections may be configured for a rotatory movement and/or a translational movement with respect to each other for changing between the open configuration and the closed configuration of the charging system.

The engaging mechanism may be pre-loaded. In other words, the engaging mechanism may be biased. Particularly, an elastic force is configured for causing the charging system, particularly the engaging sections, to assume the closed configuration. In still other words, the engaging mechanism may be preloaded to assume the closed configuration.

The engaging mechanism may be spring-loaded. For example, a torsion spring, a pull spring and/or a pressure spring may be used.

Additionally or alternatively, the engaging-mechanism may comprise two engaging components. Each of the engaging components may comprise one of the engaging sections. Each engaging component may comprise an elastic section.

The engaging components, particularly the elastic sections, may be configured for pre-loading the engaging mechanism. In other words, the engaging components, particularly the elastic sections, may be configured for causing the elastic force configured for causing the engaging mechanism, particularly the engaging sections, to assume the closed configuration.

The elastic sections, particularly the engaging components, may be made from an elastic material.

The elastic material may comprise a polymer, particularly essentially consist of a polymer.

For example, the polymer may be an elastomer and/or a thermoplastic. Thus, the elastic sections may comprise a comparably high failure strain and provide an elastic force even for relative large deformations without failure, optionally advantageously allowing for an integrated design of the engaging mechanism.

The polymer may for example be PET and/or PETG.

Thus, optionally advantageously, the elastic sections may comprise relatively large strain limits and a limited electric conductivity.

The engaging sections may be configured for being pushed apart into the open configuration by the power line cable.

The engaging components may be made from the polymer.

For example, the engaging components may be obtained by at least one of additive manufacturing and molding, such as injection molding.

The engaging mechanism may be arranged between the at least two legs.

The two engaging sections may be configured for a rotatory movement substantially about a same axis of rotation arranged between the at least two legs, e.g., about an axis defined by a revolute joint connecting the two engaging sections and the body and/or the housing.

In the closed configuration, a geometric center of the at least one magnetic core may be located above a center of gravity of the unmanned aerial vehicle.

Thus, in a perched position, in which the magnetic core encloses the power line cable, the center of gravity of the unmanned aerial vehicle may optionally be located below a geometric center of the power line cable, hence optionally advantageously providing for improved stability while the drone is perching on the power line cable.

In the closed configuration, a ratio of

> a vertical distance between the center of gravity of the unmanned aerial vehicle and the geometric center of the at least one magnetic core, particularly the magnetic core, and
> a weight of the unmanned aerial vehicle

may be between 10 mm/kg and 30 mm/kg, preferably between 15 mm/kg and 25 mm/kg, such as about 20 mm/kg.

In other words, the ratio can be expressed as

$$r = \frac{\Delta z_{cog-cmc}}{m_{UAV}}$$

$$(Eq. \ 1)$$

where r indicates the ratio, $\Delta z_{cog-cmc}$ indicates the vertical distance between the center of gravity of the unmanned aerial vehicle and the geometric center of the magnetic core, and $m_{UAV}$ indicates the mass of the unmanned aerial vehicle.

These parameters optionally advantageously provide for a good trade-off providing for stability in the perched position, a limited tendency to swing about the power line cable in the perched position and stability during flight.

The charging system may be configured for receiving alternating current (AC) from the at least one inductor and for providing direct current (DC) to the battery system and/or an onboard power network of the unmanned aerial vehicle.

In a particular example, the charging system may be configured for receiving alternating current (AC) comprising a frequency of at least 45 Hz and at most 65 Hz, such as 50 Hz or 60 Hz, from the at least one inductor and for providing direct current (DC) to the battery system.

The charging system may comprise a rectifier. The rectifier may be configured for receiving alternating current (AC) from the at least one inductor and for providing direct current (DC).

The rectifier may be a passive rectifier, such as a diode-bridge, or an active rectifier.

The charging system may comprise a plurality of capacitors. The capacitors may be configured for storing power from a DC-output of the rectifier. The charging system may comprise a capacitor bank comprising the plurality of capacitors.

Thus, optionally advantageously, a voltage ripple of the rectified DC voltage may be removed.

The charging system may comprise a DC-DC converter, particularly a DC-DC converter configured at least for step-down converting.

Thus, higher voltages may be received, optionally advantageously allowing for higher received powers and faster charging.

For example, the plurality of capacitors may comprise a capacitance of about 5mF-10mF, optionally advantageously providing for a sufficiently smooth input-voltage for the DC-DC converter.

However, the rectifier, the capacitors and the DC DC-converter may also be an integrated component, particularly in case of an active rectifier.

For example, the DC-DC converter may provide power to the onboard power network.

The battery system may comprise a battery management system. The battery management system may be configured for receiving direct current from the charging system and for controlling charge and discharge of the battery system. Particularly, the battery management system may be configured for receiving power from the step-down converter. For example, the battery management system may be configured for receiving power from the onboard power network. However, the battery management system may also be directly connected to the DC-DC converter.

The disclosed charging system may optionally advantageously allow the unmanned aerial vehicle to be charged by power wirelessly received from the power line cable.

The body may comprise a ventilation system configured for cooling the control system and/or the charging system.

The unmanned aerial vehicle, particularly the housing, may comprise at least one heat-sink.

In contrast to unmanned aerial vehicles that are connected to an external charging device for charging, thermal losses of rectifying and DC-DC-conversion may result in additional heat being generated inside the unmanned aerial vehicle.

Thus, the heat sink and/or the ventilation system may provide for reliable operation of the unmanned aerial vehicle. Further, the heat sink may allow for dissipating heat to an environment of the unmanned aerial vehicle without requiring an air inlet, thus optionally advantageously allowing for a water-resistant, particularly precipitation resistant unmanned aerial vehicle.

The unmanned aerial vehicle may be configured for landing on the power line cable from above.

In other words, the unmanned aerial vehicle may be configured for descending onto the power line cable and for perching on the power line cable.

Thus, optionally advantageously, maintaining the unmanned aerial vehicle in the perching position may be facilitated and/or a stress on an engaging portion of the at least one magnetic core may be reduced.

The camera may be at least one stereo camera. Thus, optionally advantageously, the camera may allow for localization of objects in its field of view, such as the power line cable during landing and/or inspection.

The radar sensor may be a two-dimensional radar sensor.

The field of view of the camera and a field of view of the radar sensor may both comprise an area in a vertical direction of the unmanned aerial vehicle below the unmanned aerial vehicle.

The vertical direction of the unmanned aerial vehicle may be a direction along a z-axis/a yaw axis of the unmanned aerial vehicle. "Below" may be the direction along the z-axis/yaw-axis towards the ground when the unmanned aerial vehicle is hovering.

The control system may be configured for identifying a power line below the unmanned aerial vehicle by means of the camera and/or the radar sensor.

For example, the control system may be configured for initially detecting the power line, particularly the power line cable, based on image data generated by the camera, and for verifying a correct detection by the radar sensor.

The unmanned aerial vehicle may be configured for autonomous operation.

Thus, optionally advantageously, inspection of power line cables above areas that are difficult to access may be facilitated and/or inspection personnel may be enabled to operate independent from a charging time of the unmanned aerial vehicle.

The unmanned aerial vehicle may be an unmanned aerial vehicle for overhead power line inspection.

The unmanned aerial vehicle may be an unmanned aerial vehicle for inspection of AC-overhead power lines.

The unmanned aerial vehicle may comprise a mass of at most 2.5 kg, particularly at most 2.2 kg.

Thus, optionally advantageously, a strain to the power line cable while the unmanned aerial vehicle is perching may be reduced and/or hazards due to a kinetic energy of the unmanned aerial vehicle may be reduced particularly during autonomous operation.

Alternatively, the unmanned aerial vehicle may comprise a mass of 2.5 to 5.0 kg.

Despite a higher kinetic energy, e.g., in case of a crash landing or a malfunction during autonomous operation, such higher mass may optionally advantageously allow for increased payload, enabling the use of more sophisticated sensors or sensor systems.

The unmanned aerial vehicle may be a multicopter, such as a quadrocopter or an octo-copter.

Thus, optionally advantageously, the unmanned aerial vehicle may be configured for operation in a hovering mode and/or at airspeeds significantly below fixed-wing aircraft, which may enable improved inspection of the overhead power line.

As explained elsewhere, the unmanned aerial vehicle may comprise a housing. The housing may be an enclosure of the unmanned aerial vehicle, specifically an external enclosure of the unmanned aerial vehicle. The housing may, inter alia, be configured to protect the unmanned aerial vehicle from environmental elements such as liquid, dust and debris. For example, the housing may be configured in accordance with protection standards such as IP66, providing a high level of protection against the ingress of solid particles and powerful water jets.

In some embodiments, the housing may enclose the body and the legs of the unmanned aerial vehicle. Preferably, the housing may also enclose the arms.

The housing can be formed at least partially from an electrically conductive material configured to provide electric shielding to at least one electronic component of the unmanned aerial vehicle. Electric shielding can be advantageous as it protects electronic components of the unmanned aerial vehicle from electric interference, particularly from the strong fields generated by power line cables. This can reduce the risk of damage to the unmanned aerial vehicle and improve the reliability and stability of its operation. Specifically, shielding can reduce the risk of data corruption, errors, or sensor malfunctions during inspection flights. Additionally, it enables safe charging while docked, i.e., perched, on a power line cable.

The electrically conductive material may comprise one or more of: a continuous solid sheet, a coating, a perforated sheet, or a conductive mesh. A continuous solid sheet can provide superior electric shielding, act as a heat sink for dissipating thermal energy, and offer enhanced protection against environmental elements such as liquid, dust and debris. A coating, which can be applied to substrate element of the housing, may comprise a particularly low weight. A perforated sheet, in which a solid conductive material is provided with openings, typically a regular pattern of openings, and a conductive mesh, comprising woven or welded conductive wires, can offer sufficient electric shielding while reducing the overall weight of the housing and improving airflow for cooling internal components. The apertures of the perforated sheet and/or the conductive mesh may have a characteristic dimension of at most 30 millimeters, preferably at most 20 millimeters, and more preferably at most 10 millimeters. These can balance shielding effectiveness and ventilation.

In some embodiments, a combination of these materials may be used, such as a continuous solid sheet for primary shielding and structural protection, with portions formed from a perforated sheet or conductive mesh. The portions formed from a perforated sheet or conductive mesh can be positioned to allow ventilation, while minimizing the risk of ingress of environmental elements.

The housing may comprise aluminum or an aluminum alloy. Aluminum generally offers a favorable balance between strength and low weight, making it well-suited for aerial vehicles where minimizing weight is advantageous. It can also provide electrical conductivity, enabling the housing to function as an effective electric shield. In addition, aluminum has good thermal conductivity for dissipating heat from internal components and strong resistance to corrosion, enhancing the durability of the unmanned aerial vehicle in outdoor environments. Aluminum and its alloys are also highly machinable, facilitating precise manufacturing of complex housing geometries with reduced production costs.

The housing can be electrically connected to a reference electric ground potential of the unmanned aerial vehicle. Said electrical connection can allow the conductive housing to function more effectively as an electric shield by safely channeling induced currents away from sensitive electronic components. Grounding the housing can reduce the risk of the housing itself re-radiating electric interference. It can also enhance the overall stability and reliability of the unmanned aerial vehicle's electronic systems when operating in high electric field environments, such as near power line cables.

The housing can define one or more compartments within which the motors, the sensor system, the control system the battery system and the charging system can be located.

Components of the unmanned aerial vehicle that can be prone to electric interference can be shielded by the housing.

The housing may comprise multiple interconnected conductive housing panels connected to each other to maintain shielding continuity. This can support modular construction, facilitating easier manufacturing, maintenance, and repair while preserving the electric shielding performance.

The housing panels may be attached to each other, for example, via screws, bolts, rivets, welds, adhesives, or interlocking mechanical features such as tabs and slots. The attachment between panels can be configured to provide structural integrity of the housing.

The conductive housing panels can be electrically connected to each other. Proper electrical bonding between panels can be advantageous as it can prevent electric leakage at the seams and can maintain the integrity of the protected internal environment.

Each conductive housing panel can be made of aluminum or an aluminum alloy. As described above, the use of aluminum or an aluminum alloy can have multiple advantages.

As discussed, the sensor system may comprise a camera. In such embodiments, the housing may define a camera window. The camera window may be an opening on the housing, preferably positioned on a front portion of the housing. The camera window may allow the camera to be positioned inside the housing while still permitting it to view the external environment.

The unmanned aerial vehicle may comprise a protective cover covering the camera window. The protective cover may protect the camera and other internal components of the unmanned aerial vehicle from environmental elements such as liquid, dust and debris.

The camera may be positioned within the housing so as to view through the protective cover. Thus, the camera may be protected and shielded by the housing, while still being capable of capturing images of the external environment, for example, for the inspection of power line cables and/or for navigation purposes.

A distance a distance between the protective cover and the camera is at least 1 millimeter, preferably at least 5 millimeter, such as, 10 millimeter. This distance can determine how far the camera is recessed within the housing. Positioning the camera further inside the housing can enhance electric shielding and mechanical protection. However, increasing the distance may also reduce the camera's effective field of view toward the external environment. The selected distance can provide a suitable trade-off between improving shielding performance and maintaining an adequate field of view for inspection or navigation tasks.

The protective cover can be connected to the housing in a sealing manner. This can prevent environmental elements such as liquid, dust and debris from entering the housing through the interface between the housing and the protective cover. For example, the connection may be configured to meet protection standards such as IP66, ensuring a high degree of ingress protection against both solid particles and powerful water jets.

The protective cover may comprise a transparent material, such as, a transparent polymer material, configured to transmit visible light. For example, the transparent material may comprise one of: polymethyl methacrylate (PMMA), polycarbonate, polyethylene terephthalate (PET), or polyethylene terephthalate glycol (PETG). The transparent material can enable the camera to capture clear images of the external environment while providing mechanical protection against environmental elements.

The unmanned aerial vehicle may comprise an electric shielding component covering the camera window, wherein the electric shielding component can be configured to provide a visual transparency of at least 70%, more preferably at least 85%. This can allow the unmanned aerial vehicle to maintain effective electric shielding while preserving high-quality imaging for inspection or navigation tasks.

The electric shielding may comprise a conductive coating applied to the protective cover. The conductive coating may comprise a material and/or a thickness such it can provide a visual transparency of at least 70%, more preferably at least 85%. For example, the conductive coating may comprise a material selected from indium tin oxide (ITO), fluorine-doped tin oxide (FTO), aluminum-doped zinc oxide (AZO), silver nanowire networks, graphene, or ultra-thin metallic films such as silver or gold.

Alternatively or additionally, the electric shielding component may comprise a conductive mesh. The mesh may be formed from wires having a diameter of less than 1000 micrometers, preferably less than 100 micrometers, and more preferably less than 50 micrometers. The mesh may define apertures with a diameter of at least 100 micrometers and at most 1 centimeter, preferably at least 0.1 millimeters and at most 5 millimeters. Such a configuration can provide effective electric shielding, while maintaining high visual transparency and allowing sufficient light transmission for the camera.

The conductive mesh can be embedded in or laminated onto the protective cover.

In some embodiments, the sensor system can comprise a radar sensor. In such embodiments, the control system can be configured to receive radar data from the radar sensor. The control system can be configured to detect and localize the power line cable based on the radar data. The use of radar can be advantageous as it can allow reliable detection and localization of power lines even in low-visibility conditions, such as fog, rain, dust, or darkness. This can enhance the operational robustness and safety of the unmanned aerial vehicle during inspection and navigation tasks.

The radar sensor can be positioned on the underside of the unmanned aerial vehicle, such as, on the underside of the body of the unmanned aerial vehicle, oriented downward. This placement can allow the radar sensor to have an unobstructed line of sight toward the power line cables and as the drone approaches and/or hovers above the power line cables.

The unmanned aerial vehicle may comprise a radar cover arranged to protect the radar sensor. The radar cover may be arranged to cover the radar sensor, the radar cover being configured to protect the radar sensor from electric interference and to be at least partially transparent to radar signals at the operating wavelength of the radar sensor.

The radar cover may comprise a a dielectric material selected for minimal attenuation and minimal phase distortion of the radar signals.

In some embodiments, the radar cover may comprise known electric transmission characteristics, and wherein the control system can be configured to compensate for distortions introduced by the radar cover during radar signal processing. For example, the known electric transmission characteristics of the radar cover can be determined through prior calibration measurements. Therefore, the accuracy and reliability of radar-based detection and localization can be maintained.

In a second aspect, a method is disclosed. Definitions, details and advantages disclosed in the context of the unmanned aerial vehicle may apply respectively.

The method comprises operating the unmanned aerial vehicle.

The method may further comprise generating image data relating to an overhead power line by the sensor system, approaching a power line cable by the unmanned aerial vehicle, receiving power from the power line cable by means of the charging system and charging the battery with the power received from the power line cable; and the unmanned aerial vehicle taking off from the power line cable.

The skilled person will easily understand that, e.g., the step of taking off may also be a first step of the method, followed by inspection of the overhead power line, generating the image data, approaching the power line cable, and receiving the power from the power line cable.

The method may further comprise the unmanned aerial vehicle perching on the overhead power line while receiving the power from the overhead power line.

The method may also comprise performing an inspection of an overhead power line, particularly of the overhead power line.

The method may further comprise receiving instruction data indicative of an inspection operation and autonomously performing the inspection of the overhead power line based on the instruction data.

The method may comprise the unmanned aerial vehicle detecting the overhead power line by means of the sensor system, particularly before approaching the overhead power line.

The method may comprise detecting the overhead power line by means of the at least one stereo camera, and fusing data of the at least one stereo camera and the two-dimensional radar sensor.

The method may comprise the unmanned aerial vehicle receiving power from the power line cable comprising a current rating of 90 A to 110 A, such as about 100 A, and/or comprising a diameter of at most 20 mm, and using the unmanned aerial vehicle comprising the at least one inductor, the at least one inductor comprising at least 300 windings and at most 360 windings, preferably at least 315 windings and at most 345 windings, such as about 330 windings.

Thus, optionally advantageously, an efficiency of charging may be increased with such a power line cable during normal operation of the overhead power line.

The method may also comprise the unmanned aerial vehicle receiving power from the power line cable comprising a current rating of 900 A to 1100 A, such as about 1000 A, using the unmanned aerial vehicle comprising the at least one inductor.

Thus, optionally advantageously, an efficiency of charging may be increased with such a power line cable during normal operation of the overhead power line.

The unmanned aerial vehicle may be configured for performing the disclosed method.

The following embodiments also form part of the invention.

<u>UAV embodiments</u>

Below, UAV embodiments are discussed. The UAV embodiments are abbreviated by the letter "D" followed by a number. Whenever reference is herein made to the "UAV embodiments", these embodiments are meant.

   D1. An unmanned aerial vehicle, comprising

   - an electric propulsion system comprising a plurality of motors and a plurality of rotors,

   - a sensor system, particularly wherein the sensor system comprises a camera and/or a radar sensor,

   - a control system configured for receiving data from the sensor system and for controlling the electric propulsion system,

   - a battery system comprising a plurality of battery cells, and

   - a charging system configured for receiving power by electro-magnetic induction from a power line cable, particularly from an overhead power line cable.

   D2. The unmanned aerial vehicle according to any of the preceding embodiments, wherein the unmanned aerial vehicle comprises a body, wherein the unmanned aerial vehicle comprises at least two legs at a lower side of the body.

   D3. The unmanned aerial vehicle according to any of the preceding embodiments, wherein the at least two legs form an angle of 30° to 60°, preferably 35° to 55°, and still more preferably 40° to 50°.

D4. The unmanned aerial vehicle according to any of the preceding embodiments with the features of D2, wherein the legs comprise at least some of the battery cells, preferably all battery cells.

D5. The unmanned aerial vehicle according to any of the preceding embodiments, wherein the unmanned aerial vehicle comprises a housing, particularly wherein the housing encloses the body.

D6. The unmanned aerial vehicle according to any of the preceding embodiments with the features of D2, wherein the unmanned aerial vehicle comprises a plurality of arms, wherein each of the motors is arranged at an arm, and wherein the arms comprise a detachable connection to the body and/or to the housing.

D7. The unmanned aerial vehicle according to any of the preceding embodiments with the features of D2, wherein the body comprises the charging system.

D8. The unmanned aerial vehicle according to any of the preceding embodiments with the features of D5, wherein the at least one housing is water-tight.

D9. The unmanned aerial vehicle according to any of the preceding embodiments, wherein the charging system comprises at least one inductor and at least one magnetic core,
wherein the magnetic core is configured for at least partially enclosing a cable, such as the power line cable, and wherein the inductor comprises a plurality of windings around at least a section of the core.

D10. The unmanned aerial vehicle according to the preceding embodiment, wherein the at least one magnetic core comprises at least two parts, particularly two parts, and wherein the charging system is configured for assuming an open configuration and a closed configuration.

D11. The unmanned aerial according to the preceding embodiment,

> wherein in the closed configuration, the two parts of the magnetic core form a substantially closed magnetic core, and
> wherein in the open configuration, the two parts of the magnetic core may be spaced from each other at least at one side of the magnetic core.

D12. The unmanned aerial vehicle according to any of the preceding embodiments with the features of D9, wherein the at least one magnetic core comprises at least two parts configured to form the core, particularly two parts configured to form the core.

D13. The unmanned aerial vehicle according to any of the preceding embodiments with the features of D12, particularly with the features of D13, wherein in the closed configuration of the charging system, the at least one magnetic core comprises a length of 30 mm to 50 mm, preferably 35 mm to 45 mm, such as about 40 mm.

D14. The unmanned aerial vehicle according to any of the preceding embodiments with the features of D12, particularly with the features of D13, wherein in the closed configuration of the charging system, the at least one magnetic core comprises an inner diameter of at least 20 mm and an outer diameter of at least 55 mm, preferably an inner diameter of at least 25 mm and an outer diameter of at least 52.5 mm, such as an inner diameter of about 30 mm and an outer diameter of about 50 mm.

D15. The unmanned aerial vehicle according to any of the preceding embodiments with the features of D9, wherein the at least one inductor comprises at least 300 windings and at most 360 windings, preferably at least 315 windings and at most 345 windings, such as about 330 windings.

D16. The unmanned aerial vehicle according to any of the preceding embodiments with the features of D9, particularly with the features of D12, wherein the at least one magnetic core, particularly each of the two parts of the magnetic core, comprises at least one or a plurality of metal sheet(s).

D17. The unmanned aerial vehicle according to any of the preceding embodiments with the features of D12 and D16, wherein the sheet(s) of each part of the core are welded to adjacent sheet(s).

D18. The unmanned aerial vehicle according to any of the preceding embodiments with the features of D16, wherein the metal sheets of the at least one magnetic core, particularly the plurality of metal sheets of each of the parts of the at least one magnetic core, comprise a magnetic saturation limit of at least 1.5 T, preferably at least 1.8 T, and still more preferably at least 2.1 T, such as a saturation limit of about 2.2 T.

D19. The unmanned aerial vehicle according to any of the preceding embodiments with the features of D9, particularly with the features of D16, wherein the magnetic core is made, particularly the metal sheets are made, from an iron alloy, particularly a high permeability iron alloy.

D20. The unmanned aerial vehicle according to the preceding embodiment, wherein the iron alloy is selected from a Fe-Co-alloy, a Fe-Si alloy and amorphous iron.

D21. The unmanned aerial vehicle according to any of the two preceding embodiments, wherein the iron alloy is an iron-silicon steel, particularly an iron-silicon comprising 1%-10 % silicon, particularly 5% to 8% silicon, such as about 6.5 % silicon.

D22. The unmanned aerial vehicle according to any of the preceding embodiments with the features of D16, wherein the metal sheet(s) of at least one part of the core, particularly of each of the two parts of the magnetic core, are arranged in a stack.

D23. The unmanned aerial vehicle according to the preceding embodiment, wherein the metal sheet(s) in each stack comprise substantially a same cross section in a plane perpendicular to a center axis of the magnetic core, particularly wherein the metal sheet(s) in each stack comprise substantially a same shape.

D24. The unmanned aerial vehicle according to any of the two preceding embodiments, wherein the metal sheet(s) of at least one part of the magnetic core, particularly of each part of the magnetic core, are substantially flat.

D25. The unmanned aerial vehicle according to any of the preceding embodiments with the features of D16 but D23 and D24, wherein the metal sheet(s) of at least one part of the magnetic core, particularly of each part of the magnetic core, are bent, particularly wherein at least two metal sheets of each part of the magnetic core comprise a different bending radius.

D26. The unmanned aerial vehicle according to the preceding embodiment, wherein the metal sheet(s) of at least one part of the core, particularly of each part of the magnetic core, are arranged as a stack(s) of segments of circles comprising different diameters.

D27. The unmanned aerial vehicle according to any of the preceding embodiments with the features of D16, particularly with the features of D24, wherein the metal sheet(s) are obtained by laser cutting.

D28. The unmanned aerial vehicle according to any of the preceding embodiments with the features of D16, wherein in each part of the magnetic core, the metal sheet(s) are connected by welding, particularly by spot welding.

D29. The unmanned aerial vehicle according to any of the preceding embodiments with the features of D25, wherein the at least one part, particularly the two parts of the core, are obtained by

- winding a metal band,

- joining, particularly welding, adjacent windings of the metal band, and

- cutting the wound and welded metal band into at least two parts, particularly in two parts.

D30. The unmanned aerial vehicle according to any of the preceding embodiments with the features of D10, wherein the charging system comprises an engaging mechanism, wherein the engaging mechanism comprises two engaging sections, each engaging section being connected with a part of the magnetic core,
wherein particularly, the engaging sections are configured for at least partially enclosing the power line cable in the closed configuration of the charging system.

D31. The unmanned aerial vehicle according to any of the preceding embodiments with the features of D30, wherein the two engaging sections are configured for a rotary movement and/or a translational movement with respect to each other for changing between the open configuration and the closed configuration of the charging system.

D32. The unmanned aerial vehicle according to any of the preceding embodiments with the features of D30, wherein the engaging mechanism is preloaded, particularly wherein an elastic force is configured for causing the charging system, particularly the engaging sections, to assume the closed configuration.

D33. The unmanned aerial vehicle according to the preceding embodiment, wherein the engaging mechanism is spring-loaded.

D34. The unmanned aerial vehicle according to any of the preceding embodiments with the features of D30, particularly with the features of D32, wherein the engaging-mechanism comprises two engaging components, wherein each engaging component comprises one of the engaging sections,

wherein each engaging component comprises an elastic section,

wherein particularly the elastic sections are configured for pre-loading the engaging mechanism.

D35. The unmanned aerial vehicle according to the preceding embodiment, wherein the elastic sections, particularly the engaging components, are made from an elastic material.

D36. The unmanned aerial vehicle according to any of the preceding embodiments with the features of D34, wherein the elastic material comprises a polymer, particularly essentially consists of the polymer.

D37. The unmanned aerial vehicle according to any of the preceding embodiments with the features of D32, particularly with the features of D34, wherein the engaging sections are configured for being pushed apart into the open configuration by the power line cable.

D38. The unmanned aerial vehicle according to any of the preceding embodiments with the features of D34, wherein the engaging components are made from the polymer.

D39. The unmanned aerial vehicle according to any of the preceding embodiments with the features of D2, wherein the engaging mechanism is arranged between the at least two legs.

D40. The unmanned aerial vehicle according to any of the preceding embodiments with the features of D31 and D39, wherein the two engaging sections are configured for a rotatory movement substantially about a same axis of rotation arranged between the at least two legs, e.g., about an axis defined by a revolute joint connecting the two engaging sections and the body and/or the housing.

D41. The unmanned aerial vehicle according to any of the preceding embodiments with the features of D30, wherein, in the closed configuration, a geometric center of the at least one magnetic core is located above a center of gravity of the unmanned aerial vehicle.

D42. The unmanned aerial vehicle according to any of the preceding embodiments with the features of D10, particularly with the features of D41, wherein, in the closed configuration, a ratio of

   a vertical distance between the center of gravity of the unmanned aerial vehicle and the geometric center of the at least one magnetic core, and
   a weight of the unmanned aerial vehicle

is between 10 mm/kg and 30 mm/kg, preferably between 15 mm/kg and 25 mm/kg, such as about 20 mm/kg.

D43. The unmanned aerial vehicle according to any of the preceding embodiments with the features of D9, wherein the charging system is configured for receiving alternating current (AC) from the at least one inductor and for providing direct current (DC) to the battery system and/or an onboard power network of the unmanned aerial vehicle.

D44. The unmanned aerial vehicle according to any of the preceding embodiments with the features of D9, particularly with the features of D43, wherein the charging system comprises a rectifier, wherein the rectifier is configured for receiving alternating current (AC) from the at least one inductor and for providing direct current (DC).

D45. The unmanned aerial vehicle according to any of the preceding embodiments with the features of D9, particularly with the features of D44, wherein the charging system comprises a plurality of capacitors, wherein the capacitors are configured for storing power from a DC-output of the rectifier, particularly wherein the charging system comprises a capacitor bank comprising the plurality of capacitors.

D46. The unmanned aerial vehicle according to any of the preceding embodiments with the features of D9, particularly with the features of D45, wherein the charging system comprises a DC-DC converter, particularly a DC-DC converter configured at least for step-down converting.

D47. The unmanned aerial vehicle according to any of the preceding embodiments, wherein the battery system comprises a battery management system, wherein the battery management system is configured for receiving direct current from the charging system and for controlling charge and discharge of the battery system, particularly wherein the battery management system is configured for receiving power from the step-down converter.

D48. The unmanned aerial vehicle according to any of the preceding embodiments with the features of D2, wherein the body comprises a ventilation system configured for cooling the control system and/or the charging system.

D49. The unmanned aerial vehicle according to any of the preceding embodiments, particularly with the features of D5, wherein the unmanned aerial vehicle, particularly the housing, comprises at least one heatsink.

D50. The unmanned aerial vehicle according to any of the preceding embodiments, particularly with the features of D39, wherein the unmanned aerial vehicle is configured for landing on the power line cable from above.

D51. The unmanned aerial vehicle according to any of the preceding embodiments, wherein the camera is at least one stereo camera.

D52. The unmanned aerial vehicle according to any of the preceding embodiments, wherein the radar sensor is a two-dimensional radar sensor.

D53. The unmanned aerial vehicle according to any of the preceding embodiments, in particular according to the two preceding embodiments, wherein a field of view of the camera and a field of view of the radar sensor both comprise an area in a vertical direction of the unmanned aerial vehicle below the unmanned aerial vehicle.

D54. The unmanned aerial vehicle according to any of the preceding embodiments, wherein the control system is configured for identifying a power line below the unmanned aerial vehicle by means of the camera and/or the radar sensor.

D55. The unmanned aerial vehicle according to any of the preceding embodiments, wherein the unmanned aerial vehicle is configured for autonomous operation.

D56. The unmanned aerial vehicle according to any of the preceding embodiments, wherein the unmanned aerial vehicle is an unmanned aerial vehicle for overhead power line inspection.

D57. The unmanned aerial vehicle according to any of the preceding embodiments, wherein the unmanned aerial vehicle is an unmanned aerial vehicle for inspection of AC-overhead power lines.

D58. The unmanned aerial vehicle according to any of the preceding embodiments, wherein the unmanned aerial vehicle comprises a mass of at most 2.5 kg, particularly at most 2.2 kg.

D59. The unmanned aerial vehicle according to any of the preceding embodiments, wherein the unmanned aerial vehicle is a multicopter, such as a quadrocopter or an octocopter.

D60. The unmanned aerial vehicle according to any of the preceding embodiment, wherein the unmanned aerial vehicle comprises a mass of 2.5 to 5.0 kg.

D61. The unmanned aerial vehicle according to any of the preceding embodiment and with the features of embodiment D5, wherein the housing is formed at least partially from an electrically conductive material configured to provide electric shielding to at least one electronic component of the unmanned aerial vehicle.

D62. The unmanned aerial vehicle according to the preceding embodiment, wherein the electrically conductive material comprises one or more of: a continuous solid sheet, a coating, a perforated sheet, or a conductive mesh.

D63. The unmanned aerial vehicle according to any of the 2 preceding embodiments, the housing comprises aluminum or an aluminum alloy.

D64. The unmanned aerial vehicle according to any of the 3 preceding embodiments, wherein the housing is electrically connected to a reference electric ground potential of the unmanned aerial vehicle.

D65. The unmanned aerial vehicle according to any of the 4 preceding embodiments, wherein the housing defines one or more compartments within which the motors, the sensor system, the control system the battery system and the charging system are located.

D66. The unmanned aerial vehicle according to any of the 5 preceding embodiments, wherein the housing comprises multiple interconnected conductive housing panels connected to each other to maintain shielding continuity.

D67. The unmanned aerial vehicle according to the preceding embodiment, wherein the conductive housing panels are electrically connected to each other.

D68. The unmanned aerial vehicle according to any of the 2 preceding embodiments, wherein each conductive housing panel is made of aluminum or an aluminum alloy.

D69. The unmanned aerial vehicle according to any of the preceding embodiment and with the features of embodiment D5,

> wherein the sensor system comprises a camera; wherein the housing defines a camera window; wherein the unmanned aerial vehicle comprises a protective cover covering the camera window; wherein the camera is positioned within the housing so as to view through the protective cover.

D70. The unmanned aerial vehicle according to the preceding embodiment, wherein a distance between the protective cover and the camera is at least 1 millimeter, preferably at least 5 millimeter, such as, 10 millimeter.

D71. The unmanned aerial vehicle according to any of the 2 preceding embodiments, wherein the protective cover is connected to the housing in a sealing manner.

D72. The unmanned aerial vehicle according to any of the 3 preceding embodiments, wherein the protective cover comprises a transparent material, such as, a transparent polymer material, configured to transmit visible light.

D73. The unmanned aerial vehicle according to the preceding embodiment, wherein the transparent material comprises one of: polymethyl methacrylate (PMMA), polycarbonate, polyethylene terephthalate (PET), or polyethylene terephthalate glycol (PETG).

D74. The unmanned aerial vehicle according to any of the 4 preceding embodiments, wherein the unmanned aerial vehicle comprises an electric shielding component covering the camera window, wherein the electric shielding component is configured to provide a visual transparency of at least 70%, more preferably at least 85%.

D75. The unmanned aerial vehicle according to any of the 4 preceding embodiments, wherein the electric shielding comprises a conductive coating applied to the protective cover.

D76. The unmanned aerial vehicle according to the preceding embodiment, wherein the conductive coating comprises a material selected from indium tin oxide (ITO), fluorine-doped tin oxide (FTO), aluminum-doped zinc oxide (AZO), silver nanowire networks, graphene, or ultra-thin metallic films such as silver or gold.

D77. The unmanned aerial vehicle according to any of the 6 preceding embodiments, wherein the electric shielding component comprises a conductive mesh.

D78. The unmanned aerial vehicle according to the preceding embodiment, wherein the conductive mesh is embedded in or laminated onto the protective cover.

D79. The unmanned aerial vehicle according to any of the preceding embodiments,

wherein the sensor system comprises a radar sensor;
wherein the control system is configured to receive radar data from the radar sensor; and

wherein the control system is configured to detect and localize the power line cable based on the radar data.

D80. The unmanned aerial vehicle according to the preceding embodiment, further comprising a radar cover arranged to cover the radar sensor, the radar cover being configured to protect the radar sensor from electric interference and to be at least partially transparent to radar signals at the operating wavelength of the radar sensor.

D81. The unmanned aerial vehicle according to the preceding embodiment, wherein the radar cover comprises a dielectric material selected for minimal attenuation and minimal phase distortion of the radar signals.

D82. The unmanned aerial vehicle according to any of the 2 preceding embodiments, wherein the radar cover comprises known electric transmission characteristics, and wherein the control system is configured to compensate for distortions introduced by the radar cover during radar signal processing.

D83. The unmanned aerial vehicle according to the preceding embodiment, wherein the known electric transmission characteristics of the radar cover are determined through prior calibration measurements.

Method embodiments

Below, method embodiments are discussed. The method embodiments are abbreviated by the letter "M" followed by a number. Whenever reference is herein made to the "method embodiments", these embodiments are meant.

M1. A method comprising operating an unmanned aerial vehicle, particularly an unmanned aerial vehicle according to any of the UAV embodiments.

M2. The method according to the preceding embodiment, wherein the method comprises

- generating image data relating to an overhead power line by the sensor system;

- approaching a power line cable by the unmanned aerial vehicle;

- receiving power from the power line cable by means of the charging system and charging the battery with the power received from the power line cable; and

- the unmanned aerial vehicle taking off from the power line cable.

M3. The method according to the preceding embodiment, wherein the method further comprises the unmanned aerial vehicle perching on the overhead power line while receiving the power from the overhead power line.

M4. The method according to any of the preceding method embodiments, wherein the method comprises performing an inspection of an overhead power line.

M5. The method according to the preceding embodiment, wherein the method further comprises receiving instruction data indicative of an inspection operation and autonomously performing the inspection of the overhead power line based on the instruction data.

M6. The method according to any of the preceding method embodiments, wherein the method comprises the unmanned aerial vehicle detecting the overhead power line by means of the sensor system, particularly before approaching the overhead power line.

M7. The method according to the preceding embodiment, wherein the unmanned aerial vehicle comprises the features of D51 and D52, wherein the method comprises detecting the overhead power line by means of the at least one stereo camera, and fusing data of the at least one stereo camera and the two-dimensional radar sensor.

M8. The method according to any of the preceding method embodiments with the features of M2, wherein the method comprises the unmanned aerial vehicle receiving power from the power line cable comprising a current rating of 90 A to 110 A, such as about 100 A, and/or comprising a diameter of at most 20 mm,
wherein the unmanned aerial vehicle is according to D15.

M9. The method according to any of the preceding method embodiments with the features of M2, wherein the method comprises the unmanned aerial vehicle receiving power from the power line cable comprising a current rating of 900 A to 1100 A, such as about 1000 A.

D84. The unmanned aerial vehicle according to any of the preceding UAV embodiments, wherein the unmanned aerial vehicle is configured for performing the method according to any of the method embodiments.

Brief description of the drawings

The present disclosure will be more readily appreciated by reference to the following detailed description when being considered in connection with the accompanying drawings in which:

Figure 1 is a first view of an unmanned aerial vehicle (UAV) for power line inspection;

Figure 2 is a second view of the UAV for power line inspection;

Figure 3a is a side view of the UAV with a charging system in a closed configuration, wherein some portions are shown in cross section;

Figure 3b is a side view of the UAV with the charging system in an open configuration, wherein some portions are shown in cross section;

Figure 4a is a view of a first embodiment of a magnetic core of the UAV;

Figure 4b is a view of a second embodiment of the magnetic core of the UAV;

Figures 4c-4e are views of an embodiment of an engaging component of the UAV;

Figure 5 is a schematic representation of the UAV;

Figure 6 shows a first embodiment of a method;

Figure 7 shows a second embodiment of the method;

Figure 8 is a view of the UAV perched on a power line cable;

Figure 9 is a front perspective view of another embodiment of the UAV.

Detailed description of preferred embodiments

In the following, the invention will be explained in more detail with reference to the accompanying figures. In the Figures, like elements are denoted by identical reference numerals and repeated description thereof may be omitted in order to avoid redundancies. Also, in some figures, reference numerals of elements that are present are omitted for legibility.

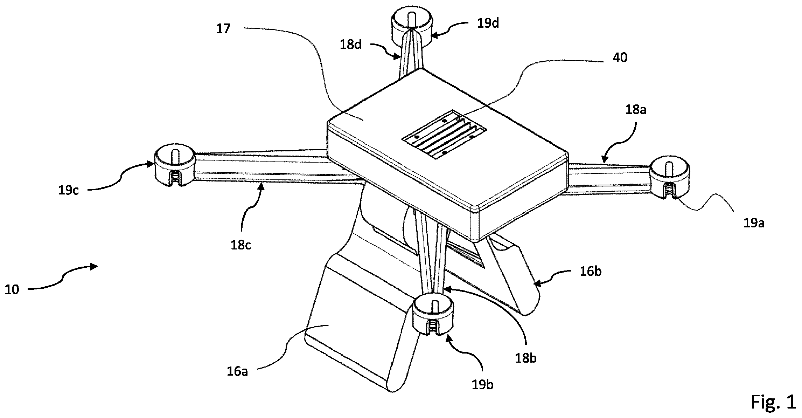

In Fig. 1, an unmanned aerial vehicle 10 (UAV) for power line inspection is shown. In the example of Fig. 1, the UAV is a multicopter comprising a plurality of arms 18a, 18b, 18c, 18d and a plurality of motors 19a, 19b, 19c, 19d, each motor driving a rotor (not shown in the Figs. for improved legibility).

As can be seen in Fig. 1, the UAV 10 comprises two legs 16a, 16b below an upper part of the UAV 10, which will be discussed in more detail below. Also, the UAV 10 comprises a ventilation system 40, whose opening can be seen in Fig. 1. The ventilation system comprises one or more ventilation units 41.

The UAV further comprises a sensor system 42, a control system 44 and a battery system 46, which will be discussed in greater detail in the following figures.

The UAV 10 is configured for autonomously performing inspection operations of overhead power lines 100. This task is particularly cumbersome when performed by inspection personnel, particularly by ground patrols, as the power line cables 110 are difficult to reach. Also, overhead power lines 100 are occasionally built in regions that are difficult to cross by foot, e.g., leading over rivers or crossing steep flanks of hills. As an alternative to ground patrols, conventional helicopters can be used for power line inspection. However, operation of helicopters in proximity to overhead power lines usually poses a significant risk of accident due to the power line cables 110 and may require operation of the helicopter outside of safe regions of its height-velocity diagram due to the low airspeed during inspection and the relatively low heights.

In contrast thereto, the UAV 10 in Fig. 1 optionally advantageously allows for autonomous or at least partially automated inspection of overhead power lines 100.

Disadvantageously, due to the ratio of stored energy and weight of state-of-the-art batteries, multicopter UAVs usually show only a limited range between charging stops. Usually, charging of the

UAV requires landing the UAV and coupling the UAV to a charging device or a charging station, which interrupts the inspection and requires flight to such a charging device or charging station.

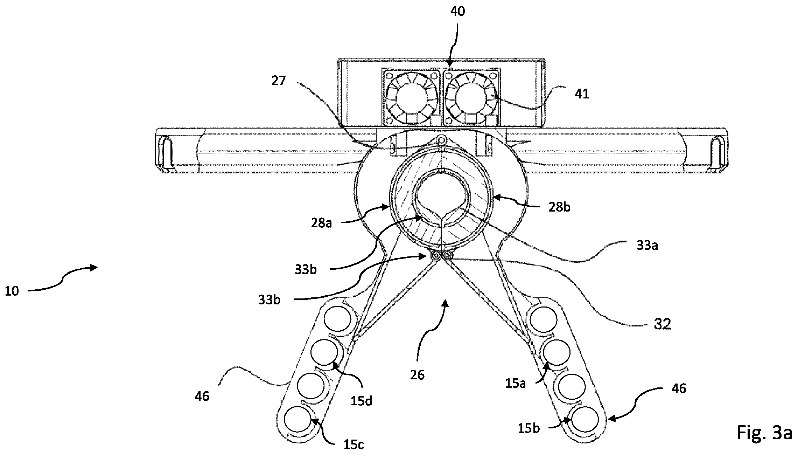

The disclosed UAV 100 is configured for being charged by receiving power from overhead power lines 100. Thus, optionally advantageously, an effective operating range of the UAV 100 may be increased. To this end, the UAV 10 comprises a charging system 20 configured for receiving power from an overhead power line 100, particularly from a power line cable 110. The charging system 20 will be discussed in more detail with respect to Figs. 3a - 4e.

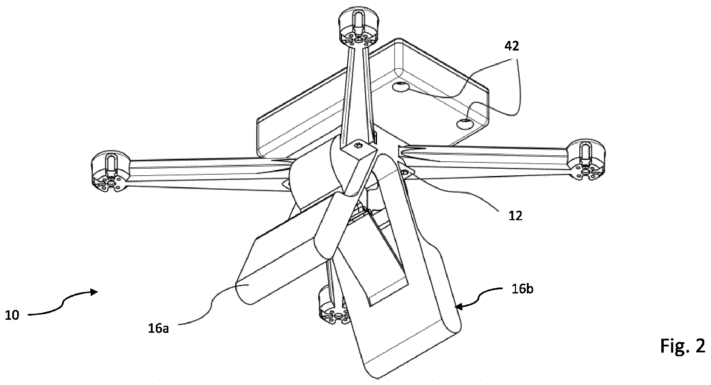

Fig. 2 shows another view of the UAV 10, from which the legs 16a, 16b of the UAV 10 can be seen. Due to the arrangement of the legs below an upper part of the UAV 10 and an opening angle formed by the legs 16a, 16b, optionally advantageously, the UAV 10 may be able to land and perch on power line cables 110. In the example of Fig. 2, the legs form an angle of approximately 45°, optionally advantageously facilitating approach of the power line cable 110.

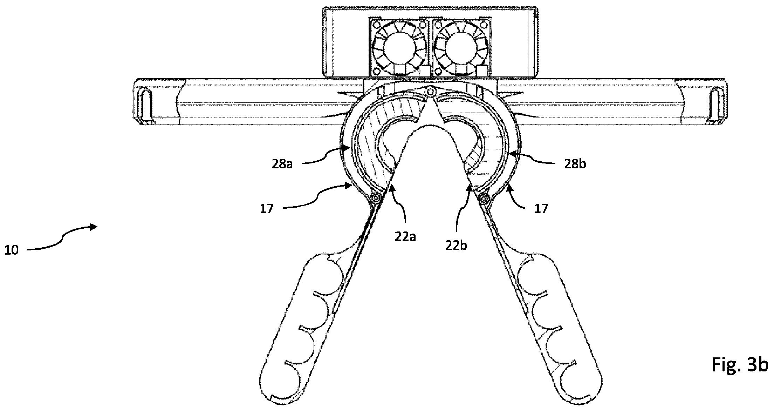

Fig. 3a shows the UAV 10 with the charging system 20 in a closed configuration. Fig. 3b shows the UAV 10 with the charging system 20 in an open configuration.

As can be seen in Fig. 3b, the UAV 10 comprises a housing 17. In the example shown in Figs. 3a-3b, the housing 17 encloses the legs 22a, 22b, a body of the UAV 10, and an outer side of the charging system 20. Also, as can be seen in Figs. 3a-3b, the charging system 20 is integrated into a structure of the UAV 10, thus allowing for safe perching of the UAV 10 on the power line cable 110 by means of the charging mechanism 20.

Additionally or alternatively, the UAV 10 may comprise a heat sink (not shown). In particular, the heat sink may be integrated into the housing 17 of the UAV 10. The housing of the UAV 10 may comprise a protection against ingress of liquids, such as water. In such cases, the UAV 10 may comprise the heat sink instead of the ventilation system 40.

The housing 17 may comprise a polymer. For example, the housing may comprise a polymer shell.

As shown in Fig. 3a, the charging system 20 comprises an engaging mechanism 26 configured for at least partially enclosing the power line cable 110, particularly for enclosing the power line cable 110, in the closed configuration of the charging system 20. In the example shown in the Figures, the engaging mechanism 26 comprises two engaging sections 28a, 28b configured for at least partially enclosing, particularly enclosing, the power line cable 110. In the example shown in Figs. 3a and 3b, the engaging sections 28a, 28b are configured for rotating substantially about a same axis of an engaging joint 27, which can for example be a revolute joint, such as a hinge joint.

In the embodiment shown in the Figs., the charging system 20 is in the closed configuration when the UAV has successfully landed at the power line cable 110 and engaging mechanism 26 encloses the power line cable 110, as well as while the UAV 10 is away from the power line cable 110 and performing an inspection or travelling along the power line 100.

In another example (not shown in the Figs.), two engaging joints can be used, each defining an axis of rotation for one of the engaging sections 28a, 28b. In such examples, the two engaging joints are preferably located adjacent to each other, still enabling the two engaging sections 28a, 28b to substantially enclose the power line cable 110 and to rotate substantially about a same axis.

In still another example not shown in the Figs, the two engaging sections 28a, 28b, may be configured for a translational movement towards each other to enclose the power line cable 110. The two engaging sections 28a, 28b may for example be mounted to one or more rails and, e.g., be configured for moving along the one or more rails.

The engaging mechanism 26 shown in Figs. 3a-3b is pre-loaded. Thus, an elastic force causes the charging system 20 to assume the closed configuration.

The engaging mechanism 26 comprises guiding elements 32a, 32b, 33a, 33b, which are shown in more detail in Fig. 3b. The guiding elements 32a, 32b are configured for opening the engaging mechanism 26 and guiding the UAV 10 when landing on the power line cable 110.

In the example of Figs. 3a and 3b, when the UAV 10 approaches the power line cable 110 from above, a contact force between the power line cable 110 and the guiding elements 32a, 32b may, for example, exceed the elastic force in the engaging mechanism 26 and push apart the engaging sections 28a, 28b, thus forcing the engaging mechanism 26 into the open configuration and allowing the power line cable 110 to slide into the engaging mechanism 26. The elastic force may then, for example, cause the engaging mechanism 26 to assume the closed configuration again.

With continued reference to Figs. 3a and 3b, when the UAV 10 takes off from the power line cable 110, i.e., when initially, the power line cable 110 is enclosed by the engaging mechanism 26 and the motors 19a, 19b, 19c, 19d provide thrust in an upward direction, a contact force between the power line cable 110 and the guiding elements 33a, 33b may push apart the engaging sections 28a, 28b and thus cause the engaging mechanism 26 to assume the open configuration. When the UAV 10 continues to move upwards with respect to the power line cable 110 and stops forming contact with the engaging mechanism 26 and/or the guiding elements 32a, 32b, 33a, 33b, the elastic force may cause the engaging mechanism to return to the closed configuration.

In other example embodiments not shown in the Figs., e.g., in case of a motor-driven engaging mechanism 26, the guiding elements 32a, 32b, 33a, 33b may not be present. Also, in such example embodiments, the engaging mechanism 26 may assume the closed configuration during flight (away from the power line cable 110), but the engaging mechanism 26 may also remain in an open configuration.

As can be seen in Fig. 3b, each of the engaging sections 28a, 28b comprises a part of a magnetic core 22a, 22b. In the closed configuration, the parts of the magnetic core 22a, 22b form the magnetic core. The charging system 20 further comprises at least one inductor whose windings are arranged about the two parts of the magnetic core 22a, 22b. For improved intelligibility, the at least one inductor is not shown in the Figs.

When the UAV 10 has landed on the power line cable 110 and the charging system 20, particularly the engaging mechanism 26, has assumed the closed configuration, an inductive coupling may result. The magnetic core 22a, 22b optionally advantageously increases the inductive coupling due to its ferromagnetic properties.

Due to the inductive coupling, the oscillating current in the power line cable induces an oscillating voltage in the at least one inductor. Thus, optionally advantageously, the charging system 20 of the UAV 10 may receive power from the power line cable 110.

However, a frequency of oscillating current in the power line cable 110 usually amounts from about 50 Hz to about 60 Hz. In contrast thereto, most interfaces designed for the purpose of inductive charging nowadays operate with frequencies significantly above this range, such as several kHz to several hundred kHz. With low frequencies and high currents, a power that can be received is limited, inter alia, due to magnetic saturation of the inductor and the magnetic core 22a, 22b.

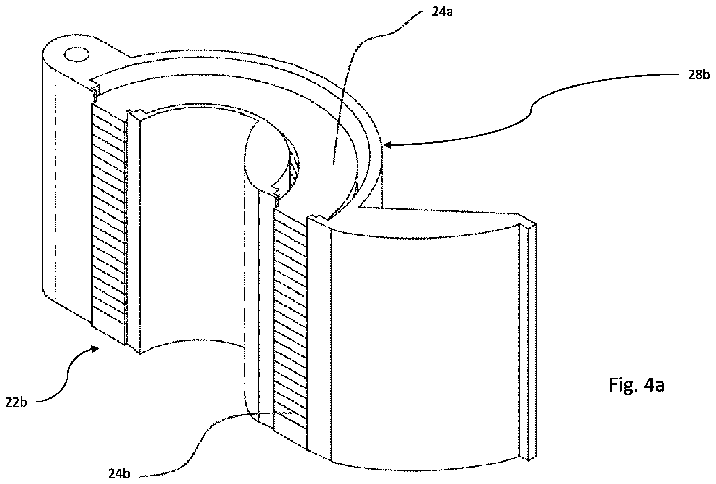

A view of a first embodiment of a part of the magnetic core 22b and the engaging section 28b is shown in Fig. 4a. The part of the magnetic core 22b is formed from a plurality of metal sheets 24a, 24b. The metal sheets 24a, 24b may for example be obtained by laser cutting. However, they may also be obtained using different cutting methods, such as sawing.

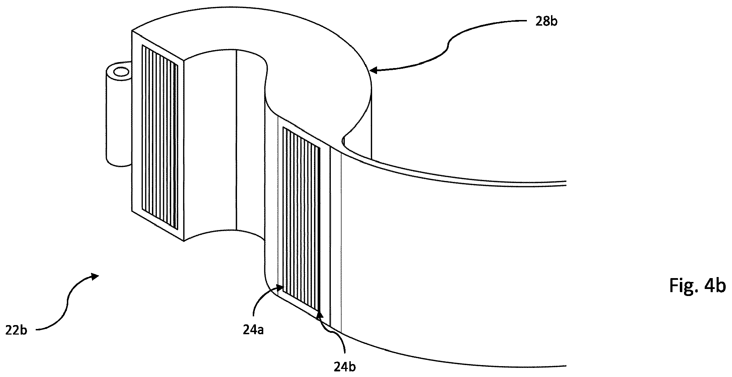

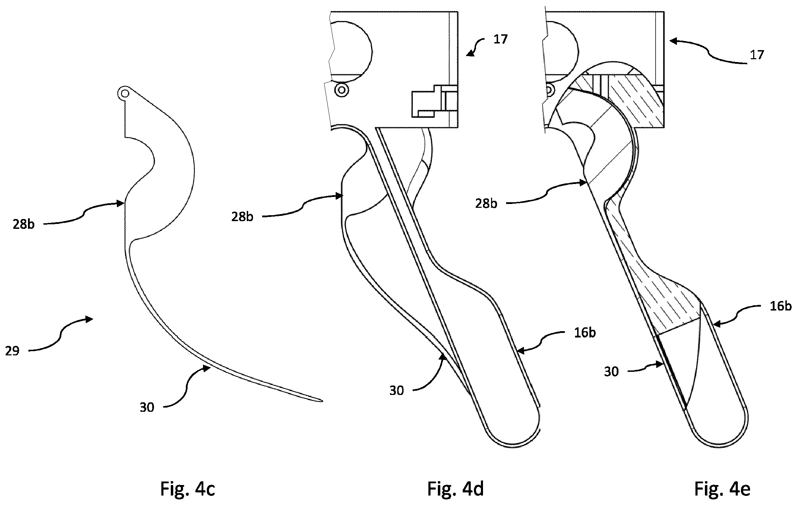

The metal sheets 24a, 24b in Fig. 4 are cutouts of silicon steel, i.e., an iron alloy comprising silicon. In the example of Fig. 4, the iron alloy comprises about 6 % - 7% silicon. Such an alloy optionally advantageously comprises a very high magnetic saturation threshold. In the example of Fig. 4, the magnetic core formed by the two parts 22a, 22b, thus optionally advantageously comprises a magnetic saturation limit above 1.5 T.

Thus, optionally advantageously, a higher power can be received by the charging system 20. In consequence, faster charging of the battery system 46 of the UAV 10 may be achieved and an improved ratio of charging time and operating time of the UAV 10 may result.

As can be seen in Fig. 4a, the engaging section 28b comprises the part of the magnetic core 22b. The exemplary engaging section 28b comprises sufficient clearance between the magnetic core 22b and inner and outer walls of the engaging section to receive windings of the inductor, thus optionally advantageously allowing for a robust and compact design. The engaging sections 28a, 28b may be closed or comprise a cover on sides perpendicular to a center axis of the core.

Fig. 4b shows a different embodiment of the engaging section 28b and the part of the magnetic core 22b. In the embodiment of Fig. 4b, the part of the magnetic core 22b may comprise a same material as in the example shown in Fig. 4a.

However, in the embodiment shown in Fig. 4b, the part of the magnetic core 22b comprises a plurality of metal sheets 24a, 24b which are curved or bent about the center axis of the magnetic core, but comprise different diameters. In other words, in the example shown in Fig. 4b, the magnetic core 22b is formed from two parts, each comprising a stack of metal sheets 24a, 24b comprising shapes of circular arcs with different diameters.

In the example of Fig. 4b, the part of the magnetic core 22b, particularly both parts of the magnetic core 22a, 22b were obtained by winding a metal sheet, during winding, welding adjacent layers of the metal sheet, and cutting the obtained wound metal sheet into the parts of the magnetic core 22a, 22b, e.g. by laser cutting, sawing or another cutting method. Thus, while being made from one metal band, the obtained part of the magnetic core comprises a stack of a plurality of metal sheets 24a, 24b.

Figs. 4c-4e show another exemplary embodiment of an engaging component 29 of the engaging mechanism 26.

Fig. 4c shows the engaging component 29 in an unbiased configuration. The engaging component 29 of Fig. 4c is for example made from an elastic polymer. The engaging component 29 of Fig. 4c comprises an elastic section, whose unbiased shape can be seen in Fig. 4c. Further, the engaging component 29 comprises the engaging component 28b.

The engaging component 28b shown in Figs. 4c-4e may for example correspond to the engaging component 28b shown in Fig. 4a or Fig. 4b as well as the respective part of the magnetic core 22b (not shown in Figs. 4c-4e).

As can be seen, the engaging component 29 may comprise a shape facilitating landing of the UAV 10 on the power line cable 110 and taking off from the power line cable 110. Thus, in the exemplary embodiment shown in Figs. 4c-4e, separate guiding elements 32a, 32b, 33a, 33b may not be necessary.

Fig. 4d shows the engaging component 29 of Fig. 4c mounted to the UAV 10, wherein the engaging mechanism 26 is shown in the closed configuration. The leg 16b of the UAV 10 may bend the elastic section 30, thus resulting in the elastic force causing the engaging mechanism 26 to assume the closed configuration.

Fig. 4e shows the engaging mechanism 26 in the open configuration. As can be seen, the engaging sections 28b (engaging section 28a not shown) are pushed apart against the elastic force of the elastic section 30. While in Fig. 4e, a maximum deformation is shown, the person skilled in the art will easily understand that the open configuration refers to a configuration where the engaging mechanism 26 comprises a sufficient clearance to allow passage of the power line cable 110.

In the example shown in Figs. 4c-4e, the engaging component 29 is obtained by additive manufacturing, more particularly by 3D-printing. Thus, the engaging component 29 can easily be manufactured comprising a shape facilitating landing of the UAV 10 on the power line cable 110 and housing the part of the magnetic core 22b as well as the respective inductor in the engaging section 28b. However, the engaging component 29 may, for example, comprise a cover to close a cavity receiving the part of the magnetic core 22b and the respective inductor.

Revisiting Fig. 3a, the battery system 46 comprises a plurality of battery cells 15a, 15b, 15c, 15d. In the example shown in Fig. 3a, the battery cells are arranged in the legs 16a, 16b of the UAV 10. Thus, optionally advantageously, a center of gravity of the UAV 10 may be below a geometric center of the magnetic core 22a, 22b in the closed configuration of the charging system 20.

In other words, when the UAV 10 has landed on a power line cable 110, the center of gravity of the UAV 10 may be lower than the geometric center of the power line cable 110. Hence, the UAV 10 may perch on the cable in a more stable manner.

Further, in the example shown in the Figures, a ratio between a distance of the center of gravity of the UAV 10 and geometric center of the magnetic core 22a, 22b in the closed configuration and a weight of the UAV 10 amounts to 20 mm/kg. In the example of Figs. 3a-3b, the weight of the UAV is about 1.4 kg, and the center of gravity is about 28 mm below the geometric center of the magnetic core 22a, 22b in the closed configuration of the charging system 20.

Optionally advantageously, this ratio may yield improved flight qualities and reduce problems due to swinging when the UAV 10 is perching.

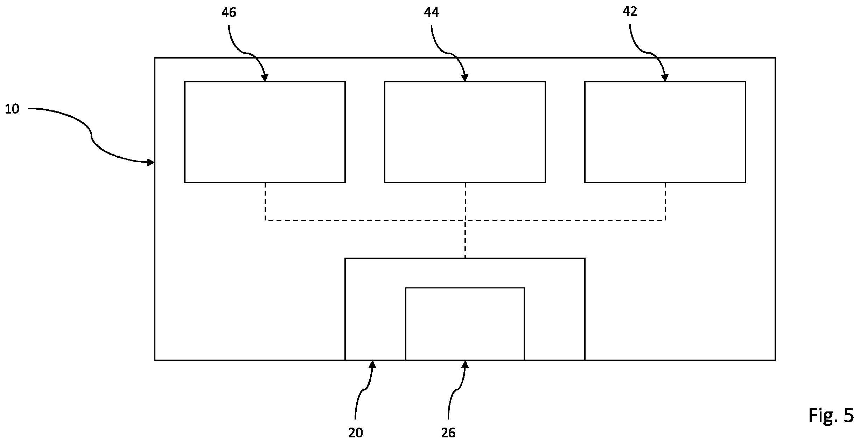

Fig. 5 shows a schematic representation of the UAV 10. In Fig. 5, the charging system 20, the sensor system 42, the control system 44 and the battery system 46 of the UAV 10 are shown. As discussed above, the charging system 20 comprises the engaging mechanism 26.

For intelligibility, the motors 19a, 19b, 19c, 19d are not shown in Fig. 5.

The battery system 46 comprises the battery cells 15a, 15b, 15c, 15d. Further, the battery system 46 comprises a battery management system controlling charge and discharge of the battery cells 15a, 15b, 15c, 15d. The battery system 46 is configured for receiving power from the charging system 20. Further, the battery system 46 is configured for providing power to other components of the UAV 10, such as the control system 44, the sensor system 42 and the motors 19a, 19b, 19c, 19d.

The sensor system 42 may comprise, for example, at least one camera for sensing visual light, and a two-dimensional radar sensor. The at least one camera for sensing the visual light may, e.g., be a stereoscopic camera. The at least one camera for sensing the visual light and the at least one two-dimensional radar sensor may, e.g., be oriented downwards, i.e. in a vertical "down"-direction of the UAV 10. Thus, the UAV 10 may be enabled for identifying and localizing a power line cable 110 for landing.

The sensor system 42 may comprise further sensors, such as further cameras, a receiver component for a global navigation satellite system (GNSS), and/or, e.g., further sensors dedicated to avionics, such as an altitude sensor, accelerometers and the like.

The control system 44 in Fig. 5 comprises a data processing system. The data processing system may, for example, be configured for receiving data from the sensor system 42, the battery system 46 and the charging system 20. In the example of Fig. 5, the control system 44 is configured for generating control signals for the motors 19a, 19b, 19c, 19d and for sending the control signals, e.g., by means of a communication bus, to the motors or one or more motor controllers. Further, the control system 44 may be configured for sending instruction data and/or control signals to the charging system 20.

The data processing system may comprise a computer-readable storage medium and a processor. The data processing system may comprise a programmable logic controller (PLC). The data processing system may comprise a microprocessor, a microcontroller, a FPGA (Field Programmable Gate Array), a DSP (Digital Signal Processor), a personal computer, an industrial PC and/or a plurality of such processors. The data processing system may comprise redundant parts, e.g. for controlling flight dynamics of the UAV 10. The data processing system may also comprise non-redundant parts, e.g., for image processing.

The computer-readable storage medium may, for example, comprise a punched card, a (floppy) disk storage medium, a hard disk, a solid state memory device, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable storage medium may also be a data communication network which allows downloading a program code, such as the Internet for example, or further systems.

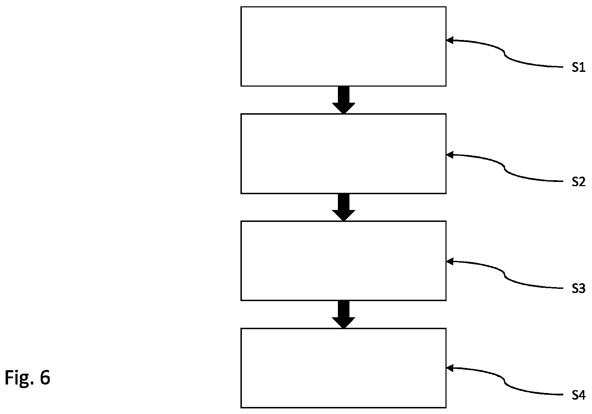

Fig. 6 shows a method. The method comprises a plurality of method steps S1, S2, S3, S4. In the example of Fig. 6, step S1 comprises generating image data relating to an overhead power line 100 by the sensor system 42.

The control system 44 is configured for identifying a power line cable 110 in the image data.

Further, the method comprises step S2, comprising approaching the power line cable 110 by the UAV 10. At least a last section of the approach of the power line cable 110 may be from above, i.e., the UAV 10 may perform a substantially vertical movement down onto the power line cable 110.

The method also comprises step S3, comprising receiving power from the power line cable 110 by means of the charging system 20. Step S3 also comprises charging the battery with the power received from the power line cable 110.

In the example of Fig. 6, the method comprises also a step S4, which comprises the UAV 10 taking off from the power line cable 110.

The person skilled in the art will easily understand that, e.g., the method may also start with step S3, followed by steps S4, S1 and S2.

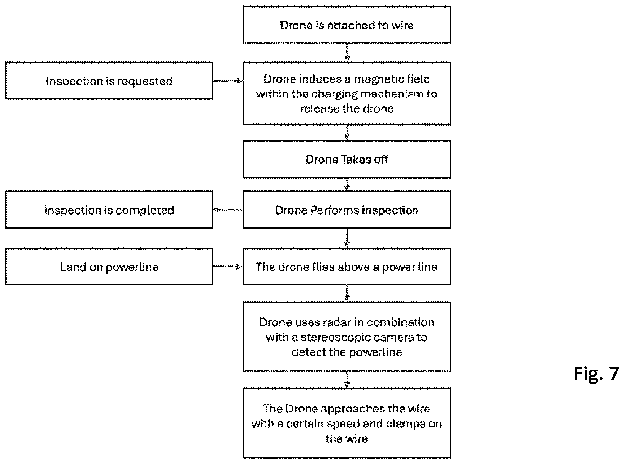

Another embodiment of the method is shown in Fig. 7. In the example of Fig. 7, initially, the UAV 10 is perching on the power line cable 110.

Upon receiving an instruction to perform an inspection, the UAV 10 takes off from the power line cable 110. Additionally, in the example method of Fig. 7, a field is induced for separating the parts of the magnetic core 22a, 22b.

In the example of Fig. 7, the UAV 10 performs an inspection of the overhead power line 100 or another overhead power line.

After completing the inspection, if a state of charge of the battery system 46 falls below a certain threshold, or based on another condition, the UAV 10 approaches an overhead power line 100. Based on data from the sensor system 42, particularly from the visual light camera, e.g., a stereoscopic camera, and the two-dimensional radar, the UAV 10 determines a position of the power line cable 110 (or of one power line cable 110 of a plurality of power line cables of the overhead power line 100).

In a subsequent step, the UAV 10 approaches the power line cable 110, lands on the power line cable 110, and controls the charging system to assume the closed configuration, enabling charging of the battery system 46 of the UAV 10.

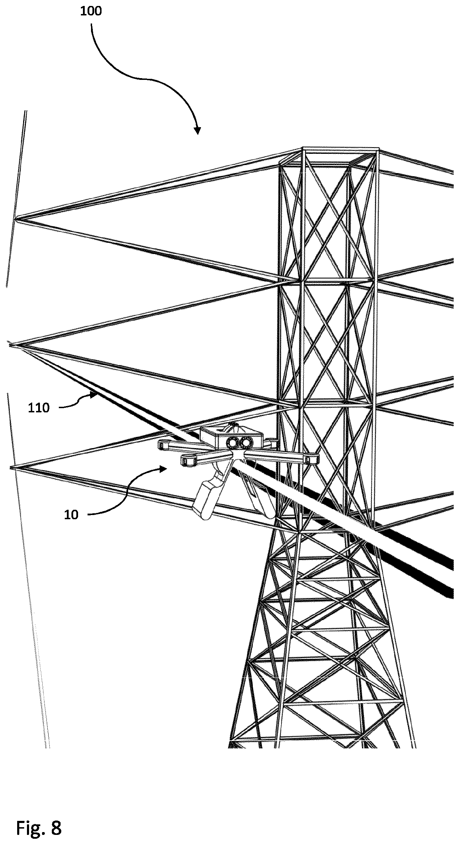

Fig. 8 is a visualization of the UAV 10 perching on a power line cable 110 of an overhead power line 100 while charging.

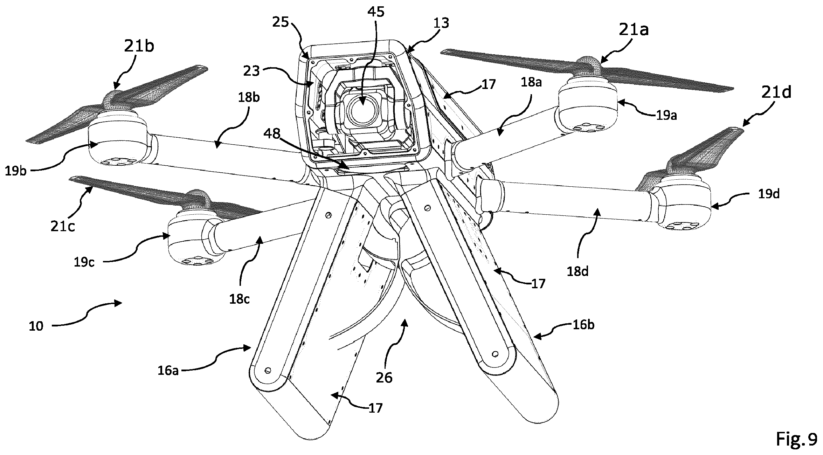

Fig. 9 illustrates an embodiment of the unmanned aerial vehicle (UAV) 10. It is noted that like reference signs refer to like features throughout the figures. Furthermore, unless explicitly stated otherwise, the features described with reference to previous embodiments may be combined with the features described herein.

The UAV 10 includes rotors 21a-21d, which were also comprised in previous embodiments but are explicitly shown in Fig. 9.

The UAV 10 may comprise a camera window 25 defined by the housing 17 and a protective cover 23 positioned to cover the camera window 25. The protective cover 23 may be configured to shield the internal components from environmental elements while allowing the camera 45 to view the external environment. An electric shielding component (not shown) covering the camera window 25 can be provided, wherein the electric shielding component can be configured to provide a visual transparency of at least 70%, more preferably at least 85%.

The UAV 10 may further comprise a radar cover 48, which may be positioned to cover a radar sensor (not shown) located within the housing 17. The radar sensor may be positioned on the underside of the UAV 10, for example, on the underside of a body 13, and oriented downward.

The housing 17 may be formed at least partially from an electrically conductive material configured to provide electric shielding to at least one electronic component of the UAV 10. As illustrated, the housing 17 may enclose the body 13 and the legs 16a-16b, and preferably also the arms 18a-18d. The housing 17 may comprise multiple interconnected conductive housing panels 171 (only some which are labelled in Fig. 9) connected to each other so as to maintain shielding continuity.

Sealing features may be provided between the housing 17 and the protective cover 23 and/or between the housing 17 and the radar cover 48, in order to prevent the ingress of liquids, dust, and debris, thereby improving the environmental resistance of the UAV 10.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

List of reference numerals

| | |
|---|---|
| 10 | UAV |
| 12 | mounting interface |
| 13 | body |
| 15a, 15b, 15c, 15d | battery cell |
| 16a, 16b | leg |
| 17 | housing |
| 18a, 18b, 18c, 18d | arms |
| 19a, 19b, 19c, 19d | motors |
| 20 | charging system |
| 21a, 21b, 21c, 21d | rotors |
| 22a, 22b | magnetic core |
| 23 | protective cover |
| 24a, 24b | metal sheet |
| 25 | camera window |
| 26 | engaging mechanism |
| 27 | engaging joint |
| 28a, 28b | engaging sections |
| 29 | engaging component |
| 30 | elastic section |
| 32a, 32b, 33a, 33b | guiding elements |
| 40 | ventilation system |
| 41 | ventilation unit |
| 42 | sensor system |
| 44 | control system |
| 45 | camera |
| 46 | battery system |
| 48 | radar cover |
| 100 | overhead power line |
| 110 | power line cable |
| 171 | conductive housing panels |

**Claims**

1. An unmanned aerial vehicle configured for autonomous operation, the unmanned aerial vehicle comprising

    - an electric propulsion system comprising a plurality of motors and a plurality of rotors,
    - a sensor system, particularly wherein the sensor system comprises a camera and/or a radar sensor,

    - a control system configured for receiving data from the sensor system and for controlling the electric propulsion system,
    - a battery system comprising a plurality of battery cells, and
    - a charging system configured for receiving power by electro-magnetic induction from a power line cable, particularly from an overhead power line cable,

    wherein the unmanned aerial vehicle is an unmanned aerial vehicle for inspection of AC-overhead power lines.

2. The unmanned aerial vehicle according to the preceding claim, wherein the unmanned aerial vehicle comprises a body and at least two legs at a lower side of the body,
   wherein particularly, the legs comprise at least some of the battery cells.

3. The unmanned aerial vehicle according to any of the preceding claims, wherein the charging system comprises at least one inductor and at least one magnetic core,

    wherein the magnetic core is configured for at least partially enclosing a cable, such as a power line cable, and wherein the inductor comprises a plurality of windings around at least a section of the core,
    wherein the at least one magnetic core comprises at least two parts, particularly two parts, wherein the charging system is configured for assuming an open configuration and a closed configuration, and
    wherein particularly, the charging system is configured for receiving alternating current (AC) from the at least one inductor and for providing direct current (DC) to the battery system and/or an onboard power network of the unmanned aerial vehicle.

4. The unmanned aerial vehicle according to the preceding claim, wherein the at least one magnetic core, particularly each of the two parts of the magnetic core, comprises at least one or a plurality of metal sheet(s),
   wherein the metal sheet(s) of at least one part of the core, particularly of each of the parts of the magnetic core, are arranged in a stack, and wherein

    (a) the metal sheet(s) of at least one part of the magnetic core, particularly each part of the magnetic core, are substantially flat, or
    (b) the metal sheet(s) of at least one part of the magnetic core, particularly of each part of the core, are bent, particularly wherein at least two metal sheets of each part of the magnetic core comprise a different bending radius.

5. The unmanned aerial vehicle according to any of the preceding claims 3-4, wherein the charging system comprises an engaging mechanism, wherein the engaging mechanism comprises two engaging sections, each engaging section being connected with a part of the magnetic core,

> wherein the engaging mechanism is arranged between the at least two legs
> wherein particularly, the engaging sections are configured for at least partially enclosing the power line cable in the closed configuration of the charging system;
> wherein, particularly, the engaging mechanism is pre-loaded, particularly wherein an elastic force is configured for causing the charging system, particularly the engaging sections, to assume the closed configuration.

6. The unmanned aerial vehicle according to any of the preceding claims 3-5, wherein, in the closed configuration, a ratio of

> a vertical distance between the center of gravity of the unmanned aerial vehicle and the geometric center of the at least one magnetic core, and
> a weight of the unmanned aerial vehicle

is between 10 mm/kg and 30 mm/kg, preferably between 15 mm/kg and 25 mm/kg, such as about 20 mm/kg.

7. The unmanned aerial vehicle according to any of the preceding claims, wherein the unmanned aerial vehicle is configured for landing on the power line cable from above.

8. The unmanned aerial vehicle according to any of the preceding claims, wherein the control system is configured for identifying a power line below the unmanned aerial vehicle by means of the camera and/or the radar sensor.

9. The unmanned aerial vehicle according to any of the preceding claims, wherein the unmanned aerial vehicle is configured for performing a method comprising

> - generating image data relating to an overhead power line by the sensor system;
> - approaching a power line cable by the unmanned aerial vehicle;
> - receiving power from the power line cable by means of the charging system and charging the battery with the power received from the power line cable; and
- the unmanned aerial vehicle taking off from the power line cable.

10. The unmanned aerial vehicle according to any of the preceding claims, wherein the unmanned aerial vehicle comprises a housing and wherein the housing is formed at least partially from an electrically conductive material configured to provide electric shielding to at least one electronic component of the unmanned aerial vehicle,

11. The unmanned aerial vehicle according to the preceding claim, wherein the housing comprises multiple interconnected conductive housing panels connected to each other to maintain shielding continuity and wherein each conductive housing panel is made of aluminum or an aluminum alloy.

12. The unmanned aerial vehicle according to any of the 2 preceding claims, wherein the housing is watertight.

13. The unmanned aerial vehicle according to any of the 3 preceding claims, wherein the sensor system comprises the camera;

> wherein the housing defines a camera window;
> wherein the unmanned aerial vehicle comprises a protective cover covering the camera window;
> wherein the camera is positioned within the housing so as to view through the protective cover.

14. The unmanned aerial vehicle according to any of the preceding claims,

> wherein the sensor system comprises the radar sensor;
> wherein the control system is configured to receive radar data from the radar sensor; and
> wherein the control system is configured to detect and localize the power line cable based on the radar data

15. A method comprising operating an unmanned aerial vehicle according to any of claims 1-14, the method comprising

> - generating image data relating to an overhead power line by the sensor system;
> - approaching a power line cable by the unmanned aerial vehicle;
> - receiving power from the power line cable by means of the charging system and charging the battery with the power received from the power line cable; and

- the unmanned aerial vehicle taking off from the power line cable.

Fig. 1

Fig. 2

Fig. 3a

EP 4 703 273 A1

10

28a

28b

17

17

22a

22b

Fig. 3b

Fig. 4a

Fig. 4b

Fig. 4c

Fig. 4d

Fig. 4e

Fig. 5

EP 4 703 273 A1

S1

S2

S3

S4

Fig. 6

```
                              ┌──────────────────────────────┐
                              │    Drone is attached to wire  │
                              └──────────────────────────────┘
                                           │
┌──────────────────────────┐   ┌──────────────────────────────┐
│                          │   │  Drone induces a magnetic field│
│  Inspection is requested │──▶│ within the charging mechanism to│
│                          │   │       release the drone        │
└──────────────────────────┘   └──────────────────────────────┘
                                           │
                              ┌──────────────────────────────┐
                              │         Drone Takes off        │
                              └──────────────────────────────┘
                                           │
┌──────────────────────────┐   ┌──────────────────────────────┐
│  Inspection is completed │◀──│    Drone Performs inspection   │
└──────────────────────────┘   └──────────────────────────────┘
                                           │
┌──────────────────────────┐   ┌──────────────────────────────┐
│     Land on powerline    │──▶│ The drone flies above a power line│
└──────────────────────────┘   └──────────────────────────────┘
                                           │
                              ┌──────────────────────────────┐
                              │ Drone uses radar in combination│
                              │  with a stereoscopic camera to │
                              │      detect the powerline      │
                              └──────────────────────────────┘
                                           │
                              ┌──────────────────────────────┐
                              │ The Drone approaches the wire  │
                              │ with a certain speed and clamps on│
                              │          the wire              │
                              └──────────────────────────────┘
```

Fig. 7

Fig. 8

Fig. 9

Europäisches
Patentamt

European
Patent Office

Office européen
des brevets

## EUROPEAN SEARCH REPORT

**Application Number**

EP 25 19 8566

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/077505 A1 (AKENS JODY H [US] ET AL) 14 March 2019 (2019-03-14) | 1-10,12, 13,15 | INV. B64U50/38 |
| Y | * figures 1, 2B, 4, 6A,B, 7A,B * | 11 | B64U10/14 |
| | * paragraph [0019] * | | B64U20/75 |
| | * paragraph [0023] * | | B64U20/87 |
| | * paragraph [0030] - paragraph [0033] * | | B64U50/19 |
| | * paragraph [0036] - paragraph [0037] * | | B64U60/50 |
| | * paragraph [0041] * | | |
| | * paragraph [0057] * | | ADD. B64U101/26 |
| X | WO 2019/073601 A1 (CHUGOKU ELECTRIC POWER [JP]) 18 April 2019 (2019-04-18) | 1,2,7-9, 14,15 | B64U101/30 |
| | * paragraph [0037] * | | |
| | * paragraph [0041] - paragraph [0044] * | | |
| | * paragraph [0052] - paragraph [0054] * | | |
| | * paragraph [0063] - paragraph [0065] * | | |
| | * figures 7, 8 * | | |
| Y | US 2024/025575 A1 (KEIKHOSRAVY KAMYAR [US] ET AL) 25 January 2024 (2024-01-25) | 11 | |
| A | * paragraph [0138] - paragraph [0140] * | 10 | **TECHNICAL FIELDS SEARCHED (IPC)** |
| A | US 2019/135113 A1 (KOO JA-IL [US]) 9 May 2019 (2019-05-09) * paragraph [0079]; figure 2c * | 4 | B64U |
| A | US 2019/176984 A1 (WABNEGGER DAVID KARL [CA] ET AL) 13 June 2019 (2019-06-13) * paragraph [0035] - paragraph [0037]; figure 4 * | 10,11 | |
| A | US 7 398 946 B1 (MARSHALL PATRICK T [US]) 15 July 2008 (2008-07-15) * column 9, line 56 - column 10, line 10; figure 8a * | 4 | |

The present search report has been drawn up for all claims

| Place of search | Date of completion of the search | Examiner |
|---|---|---|
| Munich | 10 October 2025 | Talvitie, Risto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 8566

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2025

| Patent document cited in search report | | | Publication date | Patent family member(s) | | | Publication date |
|---|---|---|---|---|---|---|---|
| US 2019077505 | A1 | | 14-03-2019 | NONE | | | |
| WO 2019073601 | A1 | | 18-04-2019 | JP | 6394833 | B1 | 26-09-2018 |
| | | | | JP | WO2019073601 | A1 | 14-11-2019 |
| | | | | WO | 2019073601 | A1 | 18-04-2019 |
| US 2024025575 | A1 | | 25-01-2024 | US | 2024025575 | A1 | 25-01-2024 |
| | | | | WO | 2024073166 | A2 | 04-04-2024 |
| US 2019135113 | A1 | | 09-05-2019 | CA | 3027501 | A1 | 21-12-2017 |
| | | | | CN | 109789794 | A | 21-05-2019 |
| | | | | EP | 3471990 | A1 | 24-04-2019 |
| | | | | US | 2019135113 | A1 | 09-05-2019 |
| | | | | US | 2022332193 | A1 | 20-10-2022 |
| | | | | WO | 2017218768 | A1 | 21-12-2017 |
| US 2019176984 | A1 | | 13-06-2019 | AU | 2018380299 | A1 | 25-06-2020 |
| | | | | CA | 2988156 | A1 | 08-06-2019 |
| | | | | CA | 3084806 | A1 | 13-06-2019 |
| | | | | CL | 2020001506 | A1 | 06-11-2020 |
| | | | | CO | 2020007007 | A2 | 19-06-2020 |
| | | | | CR | 20200253 | A | 22-08-2020 |
| | | | | DK | 3721688 | T3 | 21-05-2024 |
| | | | | EP | 3721688 | A1 | 14-10-2020 |
| | | | | ES | 2973651 | T3 | 21-06-2024 |
| | | | | NZ | 765201 | A | 20-12-2024 |
| | | | | PH | 12020550807 | A1 | 17-05-2021 |
| | | | | PT | 3721688 | T | 09-04-2024 |
| | | | | US | 2019176984 | A1 | 13-06-2019 |
| | | | | US | 2022281600 | A1 | 08-09-2022 |
| | | | | WO | 2019113424 | A1 | 13-06-2019 |
| US 7398946 | B1 | | 15-07-2008 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7398946 B1
- US 7543780 B1
- US 9878787 B2
- US 10418853 B2

**Non-patent literature cited in the description**

- **HOANG, V. D.** ; **NYBOE, F. F** ; **MALLE, N. H** ; **EBEID, E.** Autonomous Overhead Powerline Recharging for Uninterrupted Drone Operation. *The 2024 IEEE International Conference on Robotics and Automation (ICRA2024) International Conference on Robotics and Automation (ICRA).*, 2024